# EUROPEAN PATENT APPLICATION

(11) **EP 4 645 816 A1**
(43) Date of publication of application: **05.11.2025**
(21) Application number: 25172940.6
(22) Date of filing: 28.04.2025
(51) Int. Cl.: H04L 47/2425, H04L 47/2441, H04L 47/30, H04L 47/62

(54) **SYSTEMS AND METHODS FOR MAPPING HIGH PRIORITY WIFI PACKETS TO LOW LATENCY DATA PIPE**

(30) Priority: 30.04.2024 US 202418651339
(71) Applicant: Avago Technologies International Sales Pte. Limited, Singapore 768923 (SG)
(72) Inventor: Mamidwar, Rajesh Shankarrao, Irvine, 92618 (US); Hou, Victor T., Irvine, 92618 (US); Vo, Binh, Irvine, 92618 (US); Wood, Sam C., Irvine, 92618 (US)
(74) Representative: Dilg, Haeusler, Schindelmann Patentanwaltsgesellschaft mbH

(57) **Abstract**

Described embodiments provide systems and methods for mapping high-priority WiFi packets to low latency data pipe. An access point (303) can receive the one or more low latency classification rules from a device monitoring one or more low latency classification rules at a cable modem termination system, CMTS, (305). The access point (303) can be in communication with the CMTS (305) and provide wireless access to one or more devices in a local network. The access point (303) can receive packets corresponding to the one or more low latency classification rules from the CMTS (305). The access point (303) can communicate, based at least on the one or more low latency classification rules, the packets to a queue used for transmission of low latency traffic to the one or more devices in the local network.

## Description

### FIELD OF THE DISCLOSURE

This disclosure generally relates to systems for and methods of communication, including but not limited to, communications associated with internet service provider (ISP) networks, cable modems, gigabit passive optical network (GPON) devices, set-top boxes, televisions, user devices, Ethernet network devices, and/or wireless devices. Some embodiments in the disclosure relate to mapping high-priority WiFi packets to low latency data pipe for such communications and/or control of devices and networks for low latency operations.

### BACKGROUND

Latency issues in communications between a home network and an ISP can lead to various challenges and disruptions in internet connectivity and user experience, especially for evolving low latency usages including but not limited to video conferencing, cloud gaming, augmented reality/virtual reality (AR/VR) applications, and metaverse applications.

ISPs are companies that provide internet access to individuals and businesses. ISPs generally own, lease and manage a network infrastructure that connects users to the internet. This infrastructure can include various components such as data centers, routers, switches, coaxial cables, and fiber optic cables. ISPs obtain internet connectivity from larger networks, such as backbone providers or internet exchange points (IXPs), and distribute communication services to their customers.

Latency can be associated with one or more parties (e.g., cloud providers, ISPs, application developers and silicon vendors) and one or more devices and networks, including but not limited to ISP networks, cables modems, GPON devices, set top boxes, WiFi networks, Ethernet networks, access networks, backbone networks, and cloud infrastructure. To support internet speeds, ISPs are using larger burst data communications which often require larger buffers at each node. Larger bursts/buffers can increase communication latencies.

Latency can be manifested as slow response times (e.g., when loading web pages, streaming videos, or downloading files), decreased quality of real-time applications (e.g., low latency applications that rely on real-time communication, such as video conferencing, voice over IP (VoIP) calls, and online gaming), buffering and interruptions in streaming, unstable connections, adverse impact on cloud-based services (e.g., file storage, email, and productivity tools, affecting productivity and efficiency), increased vulnerability to cyberattacks, and limited capacity for interactive applications (e.g., limit the effectiveness of interactive applications that require real-time user input, such as online collaborative tools, virtual classrooms, and remote desktop applications). High latency can result in choppy video/audio playback, laggy conversations, and delayed reactions in online games, leading to a poor user experience and communication difficulties. High latency can result in data packets arriving out of order or being delayed, leading to pauses in playback and degraded streaming quality. High latency can provide attackers with more time to exploit security vulnerabilities and launch malicious attacks, such as distributed denial-of-service (DDoS) attacks or man-in-the-middle (MitM) attacks.

### SUMMARY

This Summary is provided to introduce a selection of concepts in a simplified form that are further described below in the Detailed Description. This Summary is not intended to identify key features or essential features, nor is it intended to limit the scope of the claims included herewith.

In certain communication systems, data over cable service interface specification (DOCSIS) can be introduced to provide high-speed internet access and advanced data services to residential and commercial customers over existing cable infrastructure or networks. In particular, DOCSIS introduces a dual pipe architecture designed to accommodate low latency criteria/requirements. The dual pipe architecture includes a pipe for low latency service flow (e.g., low latency service flow pipe) and a pipe for a classic service flow (e.g., classic service flow pipe). The low latency service flow pipe can communicate flows of data packets associated with latency-sensitive applications, e.g., latency-sensitive flows or packets. The classic service flow pipe can communicate flows of data packets associated with other types of applications, e.g., latency-insensitive flows or packets.

In the context of a gigabit passive optical network (GPON), GPON can support constant bit rate (CBR) services for upstream data transmission to facilitate low latency data exchange or low latency applications. In some cases, to utilize or access the low latency channels or services provided by internet service providers (ISPs), users may subscribe or pay a premium for the low latency services. However, when packets arrive from a cable modem (CM) to a wireless communication environment or infrastructure, such as an access point (AP) of a local network, certain systems may lack the mechanisms to identify whether the packets arrived from user-controlled low latency data pipe. In such cases, one or more devices within the local network may not support identifying latency-sensitive packets and may not perform low latency management for the latency-sensitive flows. Hence, the systems and methods of the technical solution can provide features and operations discussed herein to map high-priority WiFi packets to low latency data pipe.

The systems and methods of the technical solution can provide various features, functionalities, or mechanisms to allow or ensure that each packet from a low latency pipe is mapped or communicated to a high-priority queue or a dedicated low latency queue within the WiFi network infrastructure. The WiFi network infrastructure can support wireless communication between wireless communication devices, e.g., client devices or user equipment (UE). Mapping packets from the low latency pipe can enhance or optimize low latency services to the client devices (e.g., the end users) by allowing the prioritization of low latency packet delivery using the high-priority queue or low latency queue.

For example, in at least the context low latency DOCSIS, the systems and methods of the technical solution can expose or provide accessibility of the service flow number of each Ethernet packet to WiFi drivers (e.g., of a network device for providing low latency services at the local network). The systems and methods can use the service flow number to distinguish between latency-sensitive flows and latency-insensitive flows. In another example, the systems and methods can monitor tuples (e.g., 4-tuple or 5-tuple), or other packet information, for each incoming packet from the low latency pipe at a cable modem termination system (CMTS) or the CM to continuously update information associated with packets from the low latency pipe to devices at the local network. The systems and methods can provide or update packet information from low latency pipe at the local network devices to allow the devices to distinguish between different types of packets or flows at the local network. By distinguishing the different types of traffic at the local network, the systems and methods of the technical solution discussed herein can apply quality of service (QoS) parameters (e.g., prioritization or traffic shaping) or perform low latency services or management for data packets communicated from the CM to the WiFi network infrastructure at the local network, thereby improving communication latency to or from the local network and enhancing the efficiency of the low latency system.

In one aspect, the present disclosure is directed to a method for mapping high-priority WiFi packets to low latency data pipe. The method can include receiving, by an access point from a device monitoring one or more low latency classification rules at a cable modem termination system (CMTS), the one or more low latency classification rules, the access point in communication with the CMTS and providing wireless access to one or more devices in a local network. The method can include receiving, by the access point from the CMTS, packets corresponding to the one or more low latency classification rules. The method can include communicating, by the access point based at least on the one or more low latency classification rules, the packets to a queue used for transmission of low latency traffic to the one or more devices in the local network.

The method can include identifying, by the access point, the low latency traffic from the CMTS based at least on one or more flags or fields in one or more packets. The method can include identifying, by the access point, the low latency traffic from the CMTS based at least on tuple information in one or more packets. The method can include receiving, by the access point, information from the device to identify the low latency traffic from the CMTS.

The method can include using, by the access point responsive to receiving the packets corresponding to the one or more low latency classification rules, the queue having higher priority than one or more other queues. The method can include disabling, by the access point responsive to the packets corresponding to the one or more low latency classification rules, aggregation for one or more wireless connections for which the packets are communicated to the one or more devices.

The method can include bypassing, by the access point responsive to the packets corresponding to the one or more low latency classification rules, one or more mesh nodes of the local network to communicate the packets directly to the one or more devices. The method can include causing, by the access point, the packets corresponding to the one or more low latency classification rules to be communicated to the one or more devices in the local network via one or more low latency pipelines.

In another aspect, this disclosure provides a method for mapping high-priority WiFi packets to low latency data pipe. The method can include receiving, by an access point, information identifying one or more latency service flows being communicated via cable through a cable modem termination system (CMTS) in communication with the access point providing wireless connectivity to a local network. The method can include identifying, by the access point using the information, packets corresponding to the one or more latency service flows for wireless communication to one or more devices on the local network. The method can include mapping, by the access point, the packets to one or more queues corresponding to one or more low latency pipelines for wirelessly communicating the packets to the one or more devices.

The information can identify the one or more latency service flows based at least on one or more flags or fields in one or more packets of each of the one or more latency service flows. The information can identify the one or more latency service flows based at least on tuple information for one or more packets of each of the one or more latency service flows.

The method can include receiving, by the access point, the information from at least one device monitoring low latency service flows from the CMTS. The method can include receiving, by the access point, the information from at least one device monitoring low latency classification rules at the CMTS. The information can comprise tuples to identify one or more packets. The one or more low latency pipelines can be configured to at least one of bypass one or more mesh nodes or disable aggregation of data being communicated via the one or more low latency pipelines.

In yet another aspect, this disclosure is directed to a system for mapping high-priority WiFi packets to low latency data pipe. The system can include a network device in communication with a cable modem termination system (CMTS). The CMTS can receive, via cable one or more low latency service flows, the network device providing access to a local network over which packets of one or more low latency services are wireless communicated to one or more devices. The network device can receive information identifying one or more latency service flows being communicated via the CMTS. The network device can identify, using the information, packets corresponding to the one or more latency service flows for wireless communication to the one or more devices on the local network. The network device can map the packets to one or more queues corresponding to one or more low latency pipelines for wirelessly communicating the packets to the one or more devices.

The network device can be one of a modem, a router, or an access point. The one or more queues can be low latency queues or high priority queues. The network device can disable aggregation for the one or more low latency pipelines. The network device can bypass one or more mesh nodes on the local network for wireless communications to the one or more devices of the packets corresponding to the one or more latency service flows.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification. Aspects can be combined and it will be readily appreciated that features described in the context of one aspect of the invention can be combined with other aspects. Aspects can be implemented in any convenient form. For example, by appropriate computer programs, which may be carried on appropriate carrier media (computer readable media), which may be tangible carrier media (e.g. disks) or intangible carrier media (e.g. communications signals). Aspects may also be implemented using suitable apparatus, which may take the form of programmable computers running computer programs arranged to implement the aspect. As used in the specification and in the claims, the singular form of 'a', 'an', and 'the' include plural referents unless the context clearly dictates otherwise.

### BRIEF DESCRIPTION OF THE DRAWINGS

The foregoing and other objects, aspects, features, and advantages of the disclosure will become more apparent and better understood by referring to the following description taken in conjunction with the accompanying drawings, in which:
FIG. 1A is a general schematic block diagram of a communication system, in accordance with one or more embodiments;
FIG. 1B is a general schematic block diagram of portion of the communication system illustrated in FIG. 1A, in accordance with one or more embodiments;
FIG. 1C is a general schematic block diagram of applications in communication with cloud infrastructure for the communication system illustrated in FIG. 1A, in accordance with one or more embodiments;
FIG. 1D is a general schematic flow diagram of an operation for the communication system illustrated in FIG. 1A, in accordance with one or more embodiments;
FIG. 1E is a general schematic flow diagram of an operation for the communication system illustrated in FIG. 1A, in accordance with one or more embodiments;
FIG. 1F is a schematic block diagram of the communication system illustrated in FIG. 1A including a server configured for augmented reality/virtual reality and/or metaverse applications, in accordance with one or more embodiments;
FIG. 2A illustrates a block diagram of embodiments of a computing device, in accordance with one or more embodiments;
FIG. 2B illustrates a block diagram depicting a computing environment comprising a client device in communication with cloud service providers, in accordance with one or more embodiments;
FIG. 3 is a block diagram of an example system to map high-priority WiFi packets to low latency data pipe, in accordance with one or more implementations;
FIG. 4 is an example diagram of a low latency system architecture, in according with one or more implementations;
FIG. 5 is a block diagram of an example interconnection between devices within a network providing low latency services, in according with one or more implementations; and
FIG. 6 is an example flow diagram of a method for mapping high-priority WiFi packets to low latency data pipe, in accordance with one or more implementations.

The features and advantages of the present solution will become more apparent from the detailed description set forth below when taken in conjunction with the drawings, in which like reference characters identify corresponding elements throughout. In the drawings, like reference numbers generally indicate identical, functionally similar, and/or structurally similar elements.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.11^{™}, IEEE 802.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

Devices provided by ISPs and customer-owned AR/VR setups, mobile phones, OTT devices, and cloud gaming clients are configured for low latency uses in some embodiments. Some embodiments of systems and methods disclosed herein provide a real time or near real time system to monitor end to end latencies. In some applications, timestamp synchronization with applications at intermediate nodes and end devices use precision time protocol (PTP) synchronization protocols for latency monitoring. In some embodiments, latency is monitored from end-to-end so that latency of all devices within the entire end-to-end process is considered, thereby enabling identification of the origins of substantial latency.

In some embodiments, the systems and methods achieve synchronization of the wall clock across all nodes and end-user devices by employing timestamps for low latency data packets at each node. The determination of latency at each node is made by applications at each node. The determination of latency is reported back to a server that communicates with the applications. The systems and methods allow the communication system to distinguish whether latency arises from the home network, an ISP, or cloud servers.

A latency application server extension is integrated into the ISP-provided modem or router in some embodiments. In some embodiments, the server extensions have the ability to filter and transmit all necessary information to the ISP's cloud server or share open data with application developers. The server extension can store or receive information about a customer's low latency plan subscription and can track low latency usages inside the home in some embodiments.

A server extension can refer to a software component or module that extends the functionality of a server application (e.g., a latency application) in some embodiments. Server extensions can be used in various server environments such as web servers, application servers, ISP servers, and database servers to enhance their capabilities or to add specific features tailored to the needs of users or applications and can be installed using extension files. The extensions can be installed on any of the devices discussed herein. In some embodiments, the extensions are provided on an ISP controlled server in the cloud, an ISP controlled modem or access point, a third party WiFi access point, a third party modem, or ISP provided low latency devices.

In some embodiments, the server extension allows a user to select device applications for different latency treatment. A server within the residence can use classifiers and queues to reduce latency for low latency devices. The server can be part of a router, set top box, hub, etc. in some embodiments. The server extensions support multiparty involvement (e.g., cloud managers, ISPs, application developers and silicon vendors) for end to end usages in some embodiments.

With respect to latency, generally, latency refers to an amount of time a system, application or device takes to process and respond to a request in some embodiments. With respect to low latency, low latency refers to such amount of time being within a threshold, a performance level, a user experience level or requirements of the application or usage in some embodiments. The threshold, performance level, user experience level or requirements of the application may vary based on context, such as a type of application and/or use case and the systems, networks, and computer environment for which such use cases and/or application operate or execute. Low latency from a perspective of a computing environment refers to an ability of a computing system or network to provide responses without unacceptable or unsuitable delay, or otherwise minimal delay, for the context or use case of which such responses are provided. System criteria and application parameters can affect a threshold for low latency. The threshold can be fixed or variable (e.g., depending upon conditions or actual needs or requirements at a particular time). With respect to low latency networks and systems in a context of network and network communication, low latency describes a computer network, systems and environment that is designed, configured and/or implemented to support applications, network traffic and processing operations to reduce, improve latency or to meet a low latency threshold. End-to-end latency refers to latency between two points in a network or communication system. The two points can be a source of data and a consumer of data, or intermediate points therebetween in some embodiments.

A low latency device refers to any hardware, device component, or system that has low latency considerations or requirements in some embodiments. A low latency device can be a telecommunications, remote control systems, gaming, audio processing, financial trading, augmented reality and/or virtual reality device where delays can impact user experience or system performance. There may be levels of low latency requirements where one low latency device has a more stringent requirement than another low latency device in some embodiments. A low latency path refers to a path for low latency operation in some embodiments. Latency data refers to any indication of latency associated with a communication or configuration data for low latency operation or control in some embodiments. A low latency application refers to the use or performance of a low latency operation in some embodiments. A low latency device or software program can be used to perform the low latency operation (video conferencing, cloud gaming, augmented reality/virtual reality (AR/VR) applications, and metaverse applications).

Some embodiments relate to a system including a first device and an application. The application operates on the first device and is configured to append time stamps to a first packet received by the first device. The time stamps indicate a first time the first packet is received by the first device and a second time the first packet is sent by the first device. Append refers to adding or attaching information to a data structure (e.g., a packet) in some embodiments.

In some embodiments, the application is configured to determine latency information associated with communication through the first device using the time stamps. The time stamps include a first time stamp for the first time and a second time stamp for the second time. In some embodiments, the application is configured to provide a second packet including the latency information and communicate the second packet to a server remote from the first device via a virtual communication link. In some embodiments, the first time stamp is an ingress time stamp and the second time stamp is an egress time stamp.

In some embodiments, the time stamps are provided as part of a precision time protocol. In some embodiments, the first packet is for use in a low latency operation. In some embodiments, the time stamps are derived from a satellite time source. In some embodiments, the latency information includes a history of time stamps. In some embodiments, the first device is a user device, cloud infrastructure, internet service provider infrastructure, a set top box, a cable modem, or a wireless router.

Some embodiments relate to a non-transitory computer readable medium having instructions stored thereon that, when executed by a processor, cause a processor to receive a first packet from a first node. The first packet includes latency information associated with a second packet provided to the first node for a low latency application. The instructions also cause the processor to provide a third packet to the first node or other nodes to increase priority for packets for the low latency application if the latency information indicates that a latency threshold for the low latency application has not been met. The first node can be part of a communication system including a cable, fiber optic, or wireless network. The other nodes and the first node are in path associated with the second packet provided to the first node for the low latency application.

In some embodiments, the processor is disposed on a server remote from the first node. In some embodiments, the server is in communication with internet service provider infrastructure and the third packet is provided to the internet service provider infrastructure. In some embodiments, the third packet is provided to internet service provider infrastructure, a set top box, a cable modem, or a wireless router.

In some embodiments, the instructions cause the processor to provide a fourth packet to the first node or the other nodes to decrease priority for packets for the low latency application if the latency information indicates that the latency threshold for the low latency application has been met and additional bandwidth is available.

In some embodiments, the latency information comprises a user identification.

Some embodiments relate to a method of providing low latency service. The method includes providing a first time stamp for a first packet provided to a first device. The first packet can be for reception by a low latency device or as being for use in a low latency operation. The method also includes providing a second packet including latency information to a server remote from the first device via a virtual communication link.

In some embodiments, the method also includes providing a second time stamp for the first packet provided to the first device. In some embodiments, the first time stamp is an ingress time stamp and the second time stamp is an egress time stamp. In some embodiments, the first device includes an application configured to append the first time stamp to the first packet.

Some embodiments relate to a server. The server includes a first application configured to monitor end-to-end latency for a network. The network includes devices. The application is configured to receive latency information from at least one of the devices. The latency information includes time stamps or time period data for a packet to communicated across a device or a link. Monitoring or monitor refers to an action where performance is observed, checked, and/or recorded and can generally occur over a period of time.

A non-transitory computer readable medium have instructions stored thereon that, when executed by a processor, cause the processor to receive a first packet from a first node. The first packet includes latency information associated with a second packet provided to the first node for a low latency application. The instructions also cause the processor to provide a subscription offer in response to the latency information. The first node is part of a communication system comprising a cable, fiber optic, or wireless network. The other nodes and the first node are in path associated with the second packet provided to the first node for the low latency application.

In some embodiments, the first device is a set top box, a cable modem, or a wireless router. A device can refer to any apparatus, system, or component for performing an operation in some embodiments. A low latency device can refer to any device capable of performing a low latency operation. A low latency operation refers to an operation where higher than low latency operation can affect performance level, user experience level or a requirement of the application or use in some embodiments. A packet refers to a unit of data that is transmitted over a network in some embodiments. The packet can include a header and a payload. Time stamps and latency information can be appended to a packet in some embodiments. Classify or classifying may refer to any operation for determining a classification, grouping or arrangement in some embodiments. For example, a packet can be classified as being for a low latency device or application by reviewing an address, appended data, by its type of data, or other information in some embodiments. Bandwidth may refer to an amount of capacity for communication in some embodiments. Priority refers to a precedence, hierarchical order, level, or other classification in some embodiments. For example, packets can be ordered for transmission in accordance with a priority associated with a latency requirement in some embodiments. A cable, fiber optic, or wireless network refers to any network that uses one or more of a fiber optic cable, a coaxial cable, an ethernet cable, other wire, or wireless medium in some some embodiments.

For purposes of reading the description of the various embodiments below, the following descriptions of the sections of the specification and their respective contents may be helpful:
- Section A describes a communication system that may be useful for practicing the embodiments described herein.
- Section B describes low latency applications that may be useful for practicing the embodiments described herein.
- Section C describes embodiments of network environments and computing environments that may be useful for practicing the embodiments described herein.
- Section D describes embodiments of systems and methods of mapping high-priority WiFi packets to low latency data pipe.

### A. Communication System

Network latency can significantly impact internet connectivity, user experience, and the performance of various online applications and services. Some embodiments provide information for ISPs to address end-to-end latency issues through network optimization, infrastructure upgrades, and efficient routing to ensure a reliable and responsive internet experience for their customers. In some embodiments, tools are provided so that cloud servers of ISPs can collect analytics data and can reconfigure ISP provided devices like cable modems, GPON modems or set top boxes. In some embodiments, the systems and methods allow multiple parties (e.g., more than one ISP, cloud service providers, public switch operators, and application developers) to address low latency usages including but not limited to video conferencing, augmented reality (AR)/ virtual reality (VR), and metaverse end to end usage. In some embodiments, the systems and methods allow multiple parties to cooperate and work together to address latency issues. In some embodiments, the systems and methods can be used with WiFi networks, Ethernet networks, modems, access network, backbone networks, IXPs, and cloud infrastructure and allow multiple teams to work together for latency optimizations across various mediums.

In some embodiments, a latency monitor measures and reports latency for each link, device, and end application. The reports are provided to controllers of the paths, such as, ISPs, application developers, end users, etc. so that actions can be taken once low latency requirements are not met. In some embodiments, systems and methods provide a seamless latency monitoring, analysis, and optimization. The analysis of latency measurements and reporting allows for identification of latency contributors in real time and optimization by mapping traffic requiring low latency traffic to low latency queues or paths. In some embodiments, devices in the path are provided with an application (e.g., software) for effecting monitoring, analysis, and optimization. The analysis of latency measurements and reporting allows for control of devices to appropriately provide low latency traffic to low latency queues or paths. The applications can be in communication with a latency server (e.g., a server for the applications) that coordinates operations and accumulates data according to the monitoring, analysis, and optimization operations. An application or app may refer to a software program or module configured to perform specific functions or tasks on an electronic device.

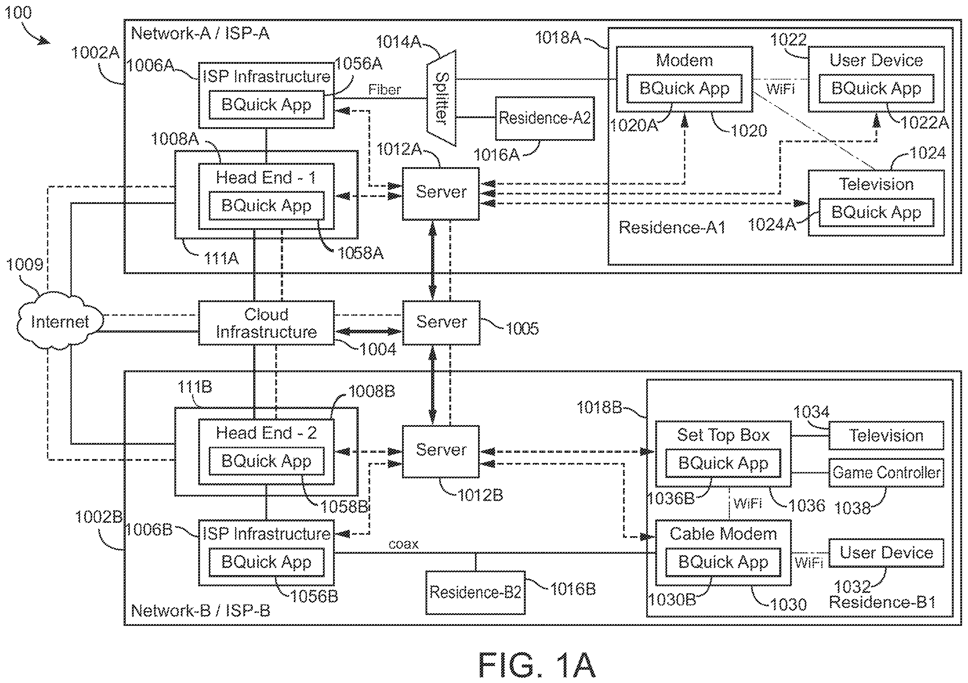

With reference FIG. 1A a communication system 100 includes a network 1002A for residences 1016A and 1018A, a network 1002B for residences 1016B and 1018B, a cloud infrastructure 1004, and a BQUICK_TOP server 1005. Communication system 100 advantageously is configured so that information is provided to ISPs to address latency issues through network optimization, infrastructure upgrades, service upgrades and/or efficient routing to ensure a reliable and responsive internet experience for customers can be achieved on networks 1002A and 1002B. BQUICK_TOP server 1005 is configured to receive the information and address latency issues in some embodiments. BQUICK_TOP server 1005 is in communication (e.g., via direct or virtual connections) with cloud infrastructure 1004 and networks 1002A and B (residences 1016A-B and 1018A-B) to share information, reports, commands, and other data in some embodiments. BQUICK_TOP server 1005, infrastructure 1004 and residences 1016A-B and 1018A-B can utilize any form of communication mediums, networks, protocols, etc. to communicate data and information.

Cloud infrastructure 1004 includes a collection of hardware, software, networking, and other resources that enable the delivery of cloud computing services over the internet in some embodiments. Cloud infrastructure 1004 includes physical servers, storage devices, networking equipment, and other hardware components hosted in data centers distributed across multiple geographic locations in some embodiments. The data centers are equipped with high-performance servers, storage arrays, and networking gear to support the computing needs of cloud services in some embodiments. The cloud infrastructure 1004 is configured to provide high-speed, redundant network links, routers, switches, and content delivery networks (CDNs) for delivery of low-latency, high-bandwidth content for users in some embodiments. Cloud infrastructure 1004 includes block storage (e.g., Amazon EBS, Azure Disk Storage), object storage (e.g., Amazon S3, Google Cloud Storage), and file storage (e.g., Amazon EFS, Azure Files) in some embodiments.

Residences 1016A and 1018A can include a network associated with a first ISP and residences 1016B and 1018B can include a network associate with the same ISP or a second ISP. In some embodiments, the networks for residences 1016A and 1018A and residences 1016B and 1018B are part of broadband access server (BAS) networks. Network 1002A includes infrastructure 1006A, a head end 1008A, a BQUICK ISP_A server 1012A, splitter 1014A, equipment for residence 1016A and equipment for residence 1018A. Equipment for residence 1018A includes an optical network unit (ONU) 1020, a user device 1022, and a television 1024. Modem or optical network unit 1020 can be a fiber optic router, switch, gateway etc. and have WiFi capabilities for a WiFi network associated with residence 1018A in some embodiments. Optical network unit 1020 is a GPON modem or optical network terminal (ONT) in some embodiments. GPON is a technology that allows for high-speed internet access over fiber optic cables. Optical network unit 1020 converts the optical signals transmitted over the fiber optic cables into electrical signals and/or radio frequency signals that can be used by devices in residence 1018A. Although system 100 is shown communicating via coaxial cable and optical cable, ground based wireless communications and satellite communications can be utilized in system 100. Optical network unit 1020 is generally provided by an optical network operator (ISP-A) and can be referred to as an optical network termination. BQUICK_TOP server 1005 and BQUICK ISP_A server 1012A can be Broadcom Analytics System (BAS Servers) that collect analytics data from various devices like modems, set top boxes, and other devices.

User device 1022 is a smart phone, AR/VR device, tablet, lap top computer, smart watch, exercise equipment, smart appliance, camera, headphone, automobile, other computing device, etc. Residence 1016A can have similar devices to residence 1018A. Television 1024 and user device 1022 communicate with optical network unit 1020 via a wireless network or wired connections. In some embodiments, optical network unit 1020 can include an ethernet router including wired connections to user device 1022, wireless modems, and television 1024.

Head end 1008A includes routers, switches, servers, and/or other infrastructure for communicating between ISP infrastructure 1006A and cloud infrastructure 1004. ISP infrastructure 1006A includes routers, switches, servers, and/or other infrastructure for communicating between head end 1008A and splitter 1014A. Splitter 1014A communicates via fiber optic cables between infrastructure 1006A and residences 1016A and 1018A., BQUICK ISP_A 1012A BQUICK_TOP server 1005 communicates with server 1012, infrastructure 1006A, head end 1008A and residences 1016A and 1018A via direct or indirect communication (e.g., via the Internet).

Splitter 1014A is a fiber optic splitter in some embodiments. Splitter 1014A can be used in fiber optic networks to divide an incoming optical signal into multiple separate signals for residences 1016A and 1018A and unify signals into one or more signals for infrastructure 1006A. Splitter 1014A can be configured for a passive optical network (PON) architecture. Bidirectional communication occurs across splitter 1014A in some embodiments. In some embodiments, splitter 114 is a conducting cable-type splitter (e.g., for a coaxial, not optical cable). Splitter 114 includes repeaters, amplifiers, signal conditioners, etc. in some embodiments.

BQUICK ISP_A server 1012A a computing device, such as a machine equipped with one or more processors, memory, and storage drives. BQUICK ISP_A server 1012A delivers assorted services to customers (e.g., residences 1016A and 1018A) for the ISP in some embodiments. BQUICK_TOP server 1005 is configured as a central hub responsible for managing and routing internet traffic for its subscribers. BQUICK ISP_A server 1012A handles requests from users such as accessing websites, sending emails, streaming content, and downloading files. BQUICK ISP_A server 1012A manages network protocols, assigns IP addresses, and facilitates communication between different devices on the internet. BQUICK ISP_A server 1012A includes operating systems like Linux or Windows Server, along with networking software such as routing protocols (e.g., BGP, OSPF), DNS (Domain Name System) servers, dynamic host configuration protocol (DHCP) servers for IP address allocation, and firewall/ security software to protect system 100 from cyber threats. BQUICK ISP_A server 1012A employs traffic shaping and quality of service (QoS) mechanisms to prioritize and optimize internet traffic, ensuring a smooth and consistent user experience for all subscribers. These operations can involve managing bandwidth allocation, prioritizing certain types of traffic (e.g., VoIP or video streaming), and mitigating network congestion during peak usage periods and can be performed in response to information from server 1012. BQUICK ISP_A server 1012A employs monitoring tools or applications to continuously analyze traffic data to detect anomalies, troubleshoot network issues, and ensure compliance with service level agreements (SLAs) and regulatory requirements in some embodiments.

BQUICK_TOP server 1005 is a computing device similar to and is configured to communicate with servers 1012A and 1012B. BQUICK_TOP server 1005 includes software advantageously configured to address latency issues through network optimization, infrastructure upgrades, and efficient routing to ensure a reliable and responsive internet experience for their customers in some embodiments. BQUICK_TOP server 1005 can receive logs of network activity, including but not limited to traffic patterns, usage statistics, and security events from servers 1012A and 1012B in some embodiments. BQUICK_TOP server 1005 employs monitoring tools to continuously analyze traffic data to detect anomalies, troubleshoot network issues, and ensure compliance with service level agreements (SLAs) and regulatory requirements in some embodiments. In some embodiments, BQUICK_TOP server 1005 is a platform configured to perform latency monitoring in real time, latency analysis in real time, and latency optimization in real time. In some embodiments, the latency optimization is performed to provide a report indicating latency issues. BQUICK_TOP server 1005 can configure paths in networks 1002A and 1002B and controls devices in networks 1002A and 1002B so that low latency requirements are met in some embodiments.

BQUICK_TOP server 1005 and BQUICK ISP_B server 1012B are similar to BQUICK ISP_A server 1012A and is configured for operation with residences 1016B and 1018B. Residences 1016A, 1018A, 1016B and 1018B are similar to each other and can include similar devices. Residence 1018B includes a cable modem 1030B, a set top box 1036B, a game controller 1038, a television 1034 and a user device 1032. User device 1032 is similar to user device 1022. Head end 1008B is similar to head end 1008A, and ISP infrastructure 106B is similar to ISP infrastructure 1006A. Televisions 1024 and 1034 are monitors, smart televisions, or other audio/video equipment. Networks 1002A and 1002B can include cameras, security equipment, fire and safety equipment, smart appliances, etc. in communication with infrastructure 1006A and 106B in some embodiments. ISP infrastructure 1006A and 106B can each include fiber optic cable, coaxial cable, remote nodes, splitters, and other equipment for cable customers in some embodiments. The equipment can include amplifiers, remote physical devices or layers and remote media access control devices or layers. Intermediate nodes in ISP infrastructure 1006A and 106B can process data packets and monitor latency and traffic at various points in network. BQUICK_TOP server 1005, BQUICK ISP_B server 1012B, BQUICK_ISP_A server 1012A are controlled by ISPs (e.g., respective ISPs) in some embodiments.

ISP infrastructure 106B is coupled to residences 1016B and 1018B via a coaxial cable in some embodiments. Cable modem 1030B is a device configured to connect devices in residence 1018B to the ISP infrastructure 106B. Cable modem 1030 includes a computer, router, gateway, or other communication device in some embodiments. Modem 1030 can be configured to provide a wireless network for communicating with devices in residence 1018B. Repeaters, amplifiers, signal conditioners, etc. can be provided on the cable associated with modem 1030 in some embodiments. Cable modem refers to any device for communicating across a cable in some embodiments. Optical network unit 1020 and modem 1030 provide data connection to the ISPs data pipe over fiber or cable. All devices inside the home can be connected to the modem over WiFi or Ethernet for internet connectivity. Each node (e.g., routers, repeaters, modems, WiFi access points) inside the home can introduce latency. ONU 1020 and modem 1030 can be any device at a home or business that connects networking devices to ISPs provided internet data pipe over coaxial cable, fiber optic cable or digital subscriber line (DSL) or cell connection (e.g., via a tower (e.g. 5G, LTE modem)) in some embodiments.

Set top box 1036 is configured to receive and decode digital television signals for viewing on television 1034. Set top box 1036 can be configured for gaming operations and can communicate with a game controller 1038. Set top box 1036 can also be configured to provide internet access, shopping services, home automation, audio features, screen mirroring, etc. Set top box 1036 includes one or more processors, memory, dedicated graphics processing units (GPUs), and/or storage capacity for storing games, applications (apps), latency data, and recorded content in some embodiments. Set top box refers to any device that connects to a television set or monitor and allows users to receive and decode video signals. A set top box can serve as an interface between a television set and various broadcast media sources, such as cable, satellite, or internet-based streaming services in some embodiments. A dashed line in the drawings can represent a virtual connection and a solid line can represent a physical connection (e.g., wires or fiber optic cable).

The cloud infrastructure 1004, head end 1008A, and head end 1008B are in communication with the internet 1009 virtually or directly. Head end 1008A and head end 1008B can be associated with buildings 111A and 111B, respectively. Communication system 100 is generally an end to end combination of networking elements used for networking traffic from a home or business to internet 1009 (e.g., public internet) in some embodiments. In some embodiments, cloud infrastructure 1004 is a set multiple servers, switches, storage units. ISPs can have pool of data center/cloud servers co-located with head ends 1008A and 1008B or dedicated links to cloud infrastructure 1004 from head ends 1008A and 1008B and head end connections to internet 1009.

Although cloud infrastructure 1004 is shown as single block, cloud servers, data servers can be collocated with ISP head ends 1008A and/or 1008B. The cloud servers can be at third party private facility and ISPs can have dedicated physical links or links via internet 1009. Depending on congestion and server processing capabilities, cloud infrastructure 1004 can be a source of latency. Cloud server processing elements can be upgraded to support latency monitor applications (E.g., BQUICK applications) or can configure devices to support low latency services in some embodiments. Head ends 1008A and 1008B can be a central facility (e.g., a central office. A head end refers to a facility where internet data or audio/video content is received, processed, and routed to end subscribers like residential or business owners in some embodiments. Head ends 1008A and 1008B can have multiple switching, routing, data metering, queuing, security elements, and/or other devices which can introduce the latencies. Head ends 1008A and 1008B can also host Cable Modem Termination Systems (CMTS) in a cable network, DSLAM (Digital Subscriber Line Access Multiplexor) in a DSL network, and OLT (Optical Line Terminal) in a fiber network.

Networks 1002A and 1002B is operated by one of as ISP-A and ISP-B. ISPs extend their services to various residences or businesses within communities, cities, or specific regions. Networks 1002A and 1002B represents two distinct networks served by same or different ISPs, which may be situated in the same neighborhood or entirely different regions or countries. Homeowners or business proprietors seek out ISPs offering services in their local areas and subscribe to internet service accordingly.

### B. Applications

System 100 advantageously includes an ISP infrastructure BQUICK application 1056A for ISP infrastructure 1006A, a head end BQUICK application 1058A for head end 1008A, a modem BQUICK application 1020A for optical network unit 1020, a user device BQUICK application 1022A for user device 1022, and a television BQUICK application 1024A for television 1024. Applications 1056A, 1058A, 1020A, 1022A, and 1024A can be software apps or programs designed to perform specific tasks or provide particular functions as described herein (e.g., latency monitoring, latency analysis, and latency optimization and the communication and storage of data related thereto). Applications 1056A, 1058A, 1020A, 1022A, and 1024A can be provided on any electronic devices in communications system 100 including but not limited to servers, computers, smartphones, tablets, smart devices, appliances, cameras, security devices, vehicles, user devices, and other digital platforms. In some embodiments, applications 1056A, 1058A, 1020A, 1022A, and 1024A can be executed on Windows, macOS, iOS, Android, or other operating systems or can be web-based and accessible through internet browsers. In some embodiments, applications 1056A, 1058A, 1020A, 1022A, and 1024A can be cross-platform with an ability to be executed on multiple OS environments. Applications 1056A, 1058A, 1020A, 1022A, and 1024A can be installed from various sources such as app stores, software repositories, or directly from ISP's website. In some embodiments, applications 1056A, 1058A, 1020A, 1022A, and 1024A are configured to communicate with BQUICK_TOP server 1005 via a virtual connection. In some embodiments, applications 1056A, 1058A, 1020A, 1022A, and 1024A are configured to communicate with BQUICK_TOP server 1005 via BQUICK ISP_A server 1012A. Applications 1056A, 1058A, 1020A, 1022A, and 1024A can be updated through app stores or via automatic updates depending on device settings.

BQUICK applications 1056A, 1058A, 1020A, 1022A, and 1024A are configured to facilitate integration and communication with other services or platforms, sharing of data, collaboration, and/or access to additional functionalities seamlessly. Applications 1056A, 1058A, 1020A, 1022A, and 1024A allow optical network unit 1020, television 1024 and user device 1022 to monitor latency, store subscription information (e.g., classic bandwidth in Megabits per second (Mbps), monitor low latency bandwidth (MBPS), max jitter in milliseconds), and provide options for upgrading internet service. The latency information and subscription information can be tracked according to device, device type, user identification, application, residence identification, etc. in some embodiments. The latency information can be provided in a packet with a time stamp to BQUICK_TOP server 1005 in some embodiments. A user interface can be provided by applications 1056A, 1058A, 1020A, 1022A, and 1024A on optical network unit 1020, television 1024 and user device 1022 to upgrade or downgrade to a different level of service in light of latency information. The different level of service can be provided to latency server 150 and BQUICK_TOP server 1005, BQUICK ISP_A BQUICK server 1012A, or BQUICK ISP_B BQUICK server 1012B in some embodiments.

System 100 advantageously includes an ISP infrastructure BQUICK application 156B for ISP infrastructure 106B, a head end BQUICK application 1058B associated with head end 1008B, a modem BQUICK application 1030B for modem 1030, and a set top box BQUICK application 1036B for set top box. Applications 156B, 1058B, 1030B, and 1036B are similar to applications 1056A, 1058A, 1020A, 1022A, and 1024A. In some embodiments, when applications 1030B, 1036B, 1056A, 156B, 1058B, 1058A, 1020A, 1022A, and 1024A are installed or associated devices join the network, the applications 1030B, 1036B, 1056A, 156B, 1058B, 1058A, 1020A, 1022A, and 1024A register at server 1012 as being compliant for operations described herein. User device 1032, television 1034, and game controller 1038 can also include an application similar to BQUICK applications 1022A and 1024A.

In some embodiments, BQUICK applications 1030B, 1036B, 1056A, 156B, 1058B, 1058A, 10201020A, 1022A, and 1024A are latency applications and are configured to communicate data so that a topology report can be provided. The topology report identifies devices/networks from end-to-end. Latency requirements of each device is provided in the report (e.g., on a device by device, type of usage by type of usage, user ID by user ID, or application by application basis) in some embodiments. The report can be stored at \server 1012 in some embodiments. The latency requirements across the topology can be used to shape traffic, prioritize flow, etc. In some embodiments, the report tracks which devices are offline so that bandwidth reserved for those devices can be used for another device in some embodiments. In some embodiments, the report tracks whether the device is not running a low latency (e.g., BQUICK) application and yet is online so that bandwidth reserved for that device can be used for other devices in some embodiments. Offline refers to a state where a device, system, or application is not actively communicating with other devices or accessing online resources in some embodiments. A device that is off or asleep is offline in some embodiments. A low latency application can be offline when the low latency application is not running in some embodiments.

In some embodiments, the low latency packets are marked so that applications 1030B, and 1036B, 1056A, 156B, 1058B, 1058A, 1020A, 1022A, and 1024A can process the packets and flow as a low latency flow. In some embodiments, the end device (e.g., application 1024A) can send a command or request indicating that latency requirements are not being met and each application in the path (applications 1020A 1056A, and 1058A) can respond to that command to process the packets for that device at a higher priority or remove traffic from that path in some embodiments. Latency issues can be sourced from an AP, a mesh, a device, or a node. Tracking bit rates or latencies at each location allow solutions to be directed to the particular location of the latency issue.

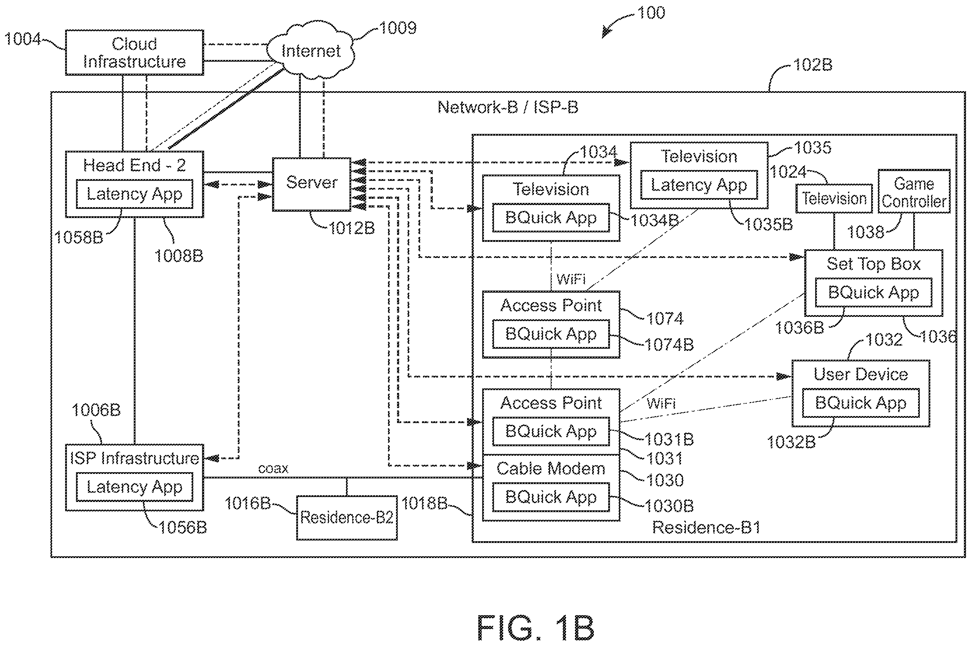

With reference to FIG. 1B, residence 1018B can include an access point 1031 in communication with modem 1030, a wireless router 1074 in communication with television 1034, a television 1035, set top box 1036, and user device 1032. Access point 1031 can be integrated with modem 1030 or can be a separate unit. User device 1032 includes a user device BQUICK application 1032B, and access point 1031 includes a latency access point application 1031B. Router 1074 includes a wireless router BQUICK application 1074B, television 1034 includes a television BQUICK application 1034B, and television 1035 includes a television BQUICK application 1035B. BQUICK_TOP server 1005, BQUICK_ ISP_A server 1012A, and BQUICK_ ISP_B server 1012B are in virtual communication with applications 1030B, 1031B, 1036B, 1074B 1032B, 1034B, 1035B, 156B, and 1058B in some embodiments. A server refers to any computing device that provides services or resources to other computers or clients within a network in some embodiments.

Applications 1030B, 1031B, 1036B, 1074B, 1032B, 1034B, 1035B, 156B, and 1058B are similar to applications 1056A, 1058A, 1020A, 1022A, and 1024A. Applications 1030B, 1031B, 1036B, 1074B, 1032B, 1034B, 1035B, 156B, and 1058B allow modem 1030, televisions 1034 and 1035, access point 1031, router 1074, set top box 1036, and user device 1032 as well as other cable modem termination systems to monitor latency, store subscription information (e.g., classic bandwidth in Megabits per second (Mbps), low latency bandwidth (MBPS), max jitter in milliseconds), and provide options for upgrading internet service. A user interface can be provided on optical network unit 1020, television 1024 and user device 1022 to upgrade or downgrade to a different level of service in light of latency information. This ability is available even if the devices are third party devices in some embodiments. In some embodiments, application 1031B or 1074B can be configured to update network topology information to BQUICK TOP server 1012, and applications 1030B, 1031B, 1036B, 1074B, 1032B, 1034B, 1035B, 156B, and 1058B can monitor low latency resources, request services, register devices, and request different latency treatment (e.g., for video, audio, commands, downloads, etc.). In some embodiments, devices or nodes associated with applications 1030B, 1031B, 1036B, 1074B 1032B, 1034B, 1035B, 156B, and 1058B can include algorithms for changing packet priority with time and latency requirements. Applications 1030B, 1031B, 1036B, 1074B, 1032B, 1034B, 1035B, 156B, and 1058B can communicate using virtual or logical connections (e.g., using internet 1009).

Access point 1031 is a networking device that allows Wi-Fi-enabled devices to connect to a wired network. Access point 1031 serves as a bridge between wireless devices, such as wireless router 1074, set top box 1036, user device 1032, televisions 1034 and 1035, and the wired network infrastructure, such as, modem 1030, routers, switches, and servers, in some embodiments. Wireless router 1074 can be a networking device that provides a wireless access point for a wireless network. Wireless router 1074 serves as a hub for a wireless local area network (LAN), allowing multiple devices in or around residence 1018B to connect to the internet and communicate with each other. Wireless router 1074 can include wirelessly built-in Ethernet switches which provide multiple ports for connecting wired devices. A wired connection can connect router 1074 to access point 1031 or modem 1030 in some embodiments. Wireless router refers to any device that provides a wireless access point for a wireless network in some embodiments.

With reference to FIGS. 1B-1C, applications 1030B and 1032B are in communication with BQUICK_TOP server 1005 via a logical interface. The architecture of applications 1030B and 1032B can be used in any of applications 1031B, 1036B, 1074B 1034B, 1035B, 156B, 1058B, 1056A, 1058A, 1020A, 1022A, and 1024A. The logical interface is a virtual interface that represents a specific network configuration or functionality within a networking device, such as modem 1030 or user device 1032. The logical interface is software defined and can be created, configured, and managed within the device's operating system in some embodiments. Applications 1030B and 1032B can be provided with modems, routers, access points, mesh devices, set top boxes, AR/VR devices, game consoles, phones, over the top devices (OTTs), etc. Applications 1030B, 1032B, and cloud infrastructure 1004 can communicate using app to app communication. App to app communication is an exchange of data, messages, or commands between two or more software applications running on the same device or different devices over a network in some embodiments. App to app communication enables seamless integration and collaboration between different apps, allowing them to share information, trigger actions, or synchronize state without requiring user intervention in some embodiments. BQUICK _TOP server 1012 can include an application for monitoring and/or determining end to end latency.

In some embodiments, applications 1020A, 1024A, 1032B, 1034B, 1035B, 1036B, and 1032B are client level applications. Applications 1036B can be configured for highest priority (e.g., lowest latency applications) while ordinary streaming latencies are associated with applications 1020A, 1024A, 1032B, 1034B, 1035B, 1032B. Applications 1074A and 1031B are node level application and can be configured to provide or assign priority for applications 1020A, 1024A, 1032B, 1034B, 1035B, 1036B, and 1032B (client level applications) and associated devices. Application 1030B can be configured to provide or assign priority between application 1036B, applications 1074A and 1031B (e.g., node level applications), and applications 1020A, 1024A, 1032B, 1034B, 1035B, and 1032B (e.g., client level applications) as well as their associated devices. Cloud level applications can include applications 156B and 1058B in some embodiments. In some embodiments, the partitioning of applications 156B, 1058B, 1020A, 1024A, 1030B, 1032B, 1034B, 1035B, 1036B, 1074A, and 1032B allows for segregation of local and cloud processing, reduction in cloud server communication and ISP bandwidth, local data storage and security, availability of local resources (including edge processing and filtering of information), and faster response to low latency devices. In some embodiments, application 1030B has a server extension and handles communication between server 1012 and applications 1020A, 1024A, 1032B, 1034B, 1035B, 1036B, and 1032B.

When application 1030B includes the server extension, application 1030B can be a client level application or a cloud level application and maintain a virtual connection to server 1012 in some embodiments. The server extensions can provide advantages of decoupling development from ISPs which can be helpful for standardization, of having a direct data path from application 1020A or 1031B to app developer servers, of maintaining local data privacy, of availability of local resources (e.g., local machine learning (ML), edge processing and filtering information), and of faster response to local low latency gadgets or devices in some embodiments.

In some embodiments, applications 156B, 1058B, 1020A, 1024A, 1030B, 1032B, 1034B, 1035B, 1036B, 1074A, and 1032B can achieve synchronization of the wall clock across all nodes and end user devices. Applications 156B, 1058B, 1020A, 1024A, 1030B, 1032B, 1034B, 1035B, 1036B, 1074A, and 1032B utilize timestamps for low-latency data packets at each node. This enhancement enables the determination of latency at each node and reporting to server 1012 in some embodiments. By utilizing a precision time protocol (PTP), applications 156B, 1058B, 1020A, 1024A, 1030B, 1032B, 1034B, 1035B, 1036B, 1074A, and 1032B can distinguish whether latency arises from the home network, an ISP, or cloud servers using time stamps in some embodiments. Each device can have an associated PTP clock that communicates with the application associated with the device. The latency per node can be shared across networks so that networks can avoid devices having latency issues or can perform other operations to reduce latency at that node (e.g., divert higher latency traffic away from the node having issues). The PTP clock can be derived form a satellite clock in some embodiments.

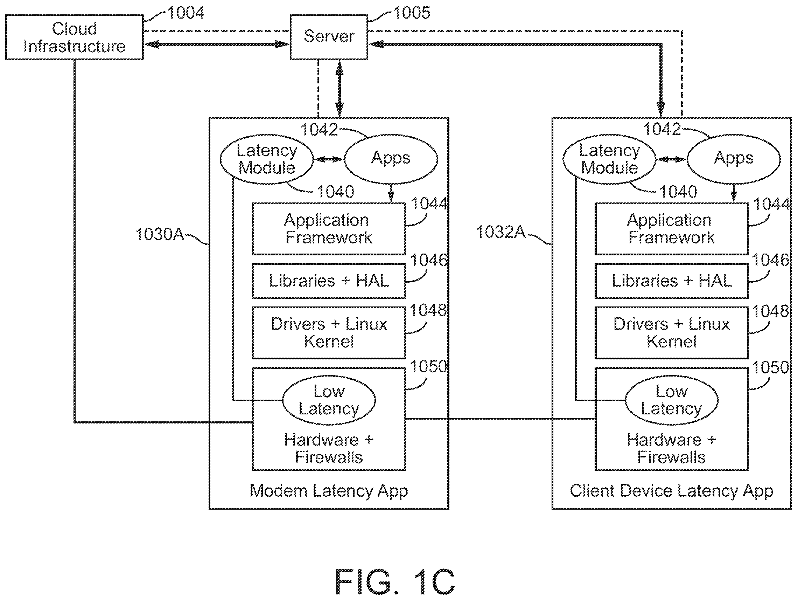

With reference to FIG. 1C, applications 1030B and 1032B each include a latency module 1040, applications 1042, an application framework 1044, libraries and hardware abstraction layer 1046, drivers and linux kernel 1048, and hardware and firewalls 1050. In some embodiments, latency module 1040 is configured to control and monitor hardware and firewalls based upon latency. Latency module or BQUICK module 1040 is software configured to provide the low latency operations described herein. Applications 1042 are apps for performing various operations and can include third part apps (e.g., android package kit (APK)). Application framework 1044 is a structured set of software components that provide the necessary infrastructure for building and running applications.

Libraries and hardware abstraction layer 1046 provides standardized interfaces for device drivers to interact with hardware components. Libraries and hardware abstraction layer 1046 allows applications and system services to access hardware functionalities in a consistent manner across different devices. Libraries and hardware abstraction layer 1046 provide collections of pre-written code that developers can use to perform common tasks or implement specific functionalities and generally contain reusable functions, classes, or modules that provide specific capabilities.

Drivers and linux kernel 1048 serves as the bridge between the hardware and the software layers of the system, managing system resources in some embodiments. Drivers and linux kernel 1048 provide essential services and facilitate communication between software processes and hardware devices in some embodiments. Drivers and linux kernel 1048 includes software components that facilitate communication between the operating system (OS) and hardware devices in some embodiments.

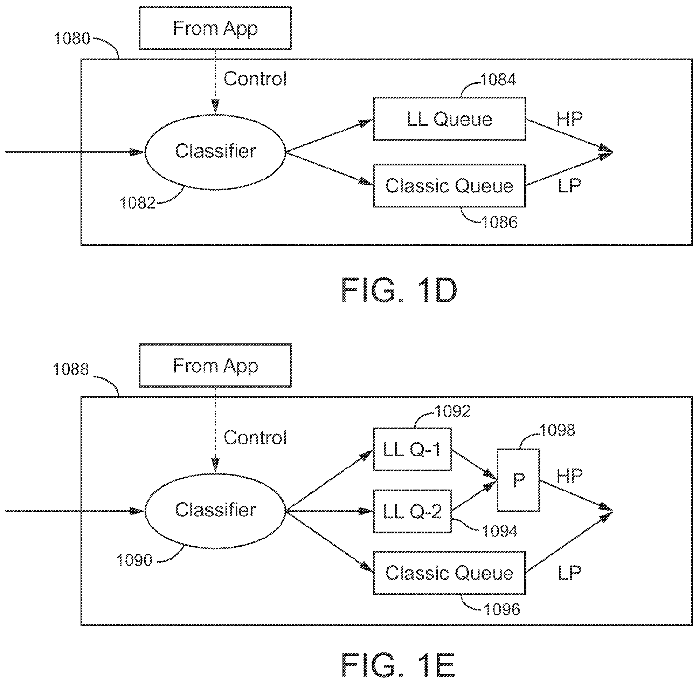

With reference to FIG. 1D, a function, service, process, or operation 1080 can controlled by any of applications 1030B, 1031B, 1036B, 1074B, 1032B, 1034B, 1035B, 156B, 1058B, 1056A, 1058A, 1020A, 1022A, and 1024A (FIGS. 1A and 1B). Operation 1080 use a classifier 1082, a low latency queue 1084, and a classic queue 1086. Queues 1084 and 1086 are memory or data structures used to manage the flow of packets or messages within a network device or system 100 (FIG. 1A). Queue 1084 is associated with a high performance path, and queue 1086 is associated with a low performance path in some embodiments. A queue refers to any structure for storing information (e.g., packets) in some embodiments. Any networking device can have separate queue to support low latency traffic and operation can be performed any device in communication system 100 (FIG. 1A). Applications 1030B, 1031B, 1036B, 1074B, 1032B, 1034B, 1035B, 156B, 1058B, 1056A, 1058A, 1020A, 1022A, and 1024A can report latency for each queue independently.

Queues 1084 and 1086 are configured as first-in-first-out (FIFO) buffers that temporarily hold packets or messages before messages are transmitted or processed in some embodiments. Queue 1084 can store messages for the high performance path (e.g., low latency path), and queue 1086 can store messages for the low performance path (e.g., high latency path) in some embodiments. In some embodiments, a low latency operations may use a low performance path, and a high latency operations may use the high performance path, or each uses the same path. A path refers to any communication route or channel through which data or information travels from a source to a destination (e.g., through devices and across mediums) in some embodiments. A path can include intermediate components and links involved in transmitting data between two or more points in one or more networks in some embodiments. A low latency path refers to a path for low latency traffic in some embodiments.

Classifier 1082 is processor and/or software configured to categorize or classify network traffic based on certain criteria (e.g., by latency requirements and/or priority). Classifier 1082 is configured to enforce network policies, prioritize traffic (e.g., for the high performance or low performance path), and/or apply specific actions based on the classification results in some embodiments. Classifier 1082 is used to differentiate between different classes of traffic (e.g., voice, video, data) and apply QoS policies to ensure that critical applications receive adequate bandwidth and latency requirements. Classifier 1082 prioritizes traffic based on predefined criteria, ensuring that important or time-sensitive applications receive preferential treatment over less critical traffic by appropriately providing traffic to queue 1084 and queue 1086. Classifier 1082 can utilize information about customer subscriptions (e.g., device level, user level, residence level) to classify traffic in some embodiments.

With reference to FIG. 1E, an operation 1088 can be controlled by any of applications 1030B, 1031B, 1036B, 1074B, 1032B, 1034B, 1035B, 156B, 1058B, 1056A, 1058A, 1020A, 1022A, and 1024A. Operation 1088 is similar to operation 1080 and utilizes a classifier 1090, a first low latency queue 1092, a second latency latency queue 1094, a classic queue 1096, and a priority queue 510. Queues 1092, 1094, 1096 and 1098 are memory or data structures used to manage the flow of packets or messages within a network device or system 100 (Fig. 1A). Queues 1092 and 1094 are associated with a high performance path, and queue 1096 is associated with a low performance path in some embodiments. Queue 1098 receives messages from queues 1092 and 1094 and provide messages or data to the high performance path based upon a priority scheme associated with queues 1092 and 1094 in some embodiments. Classifier 1090 is similar to classifier 1082 and is configured to categorize or classifying network traffic based on certain criteria (e.g., by latency requirements) for queues 1092, 1094, and 1096 in some embodiments. In some embodiments, classifiers 1082 and 1090 are software modules operating on a device (e.g., server, ISP supplied device, user device, etc.). In some embodiments, queues 1084, 1086, 1092, 1094, 1096 and 1098 are virtual queues provided on the memory of the device configured by operation 1080 or 1088. In some embodiments, queues 1084, 1086, 1092, 1094, 1096 and 1098 are dedicated hardware queues (e.g., FIFO memories) on the device. Classifiers 1090 and 1082 and queues 1084, 1086, 1092, 1094, 1096 and 1098 are implemented in an application layer of the device and may utilize services and structures provided by the media access layer and the physical layer in some embodiments. Classifiers 1082 and 1090 can be configured by commands provided by BQUICK TOP server 1012 to appropriately classify low latency traffic in some embodiments.

In some embodiments, applications 1080 and 1088 are configured to operate at nodes associated with devices including but not limited to ONU 1020, modem 1030, set top box 1036, television 1024, access point 1031, user device 1032, and/or router 1074. Applications 1080 and 1088 are configured to control and/or partition subscribed low latency bandwidth traffic (e.g., 20 Mbps vs 50 Mbps), track latency statistics (e.g., minimum, maximum, average latencies for low latency flows), process five tuples (e.g., source IP address, source port, destination IP address, destination port, transport protocol) for X number of flows (where X is any integer) with latency and/or bandwidth requirements, monitor latency introduced by a node, provide timestamps at ingress and egress ports, monitor buffer depths, perform boundary clock precision protocol (e.g., IEEE 10588-2008 standard and extensions thereof), and prioritize of traffic among multiple low latency clients. Monitored and measured information can be appended to packets for provision to other nodes and servers (e.g., server 1012). For example, time stamps can be applied to packets at each node or device. Latency can be determined by comparing time stamps. Applications 1080 and 1088 are also configured to track status of low latency applications and provide a user interface for controlling low latency configurations in some embodiments. Classifiers 1082 and 1090 and/or queues 1084, 1086, 1092, 1094, 1096 are configured by applications 1030B, 1031B, 1036B, 1074B, 1032B, 1034B, 1035B, 156B, 1058B, 1056A, 1058A, 1020A, 1022A, and 1024A (e.g., at each respective node) in some embodiments. In some embodiments, servers 1012, 1012A, and 1012B configure classifiers 1082 and 1090 and/or queues 1084, 1086, 1092, 1094, 1096 via virtual connections.

Applications 1080 and 1088 can identify end to end bandwidth available for low latency applications, provide a user real time feedback of monitored latency, and adjust latency responses. The adjustment may be in response to purchased services or bandwidth upgrades in some embodiments. In some embodiments, applications 1080 and 1088 can be configured to provide an advertisement or customer offer for low latency resources. Applications 1080 and 1088 can address variable latency for each user and adjust response for the latency level at a particular time, for a particular time period, etc. Latency information can be communicated to servers 1012A, 1012B, and 1012 and applications 1030B, 1031B, 1036B, 1074B, 1032B, 1034B, 1035B, 156B, 1058B, 1056A, 1058A, 1020A, 1022A, and 1024A as timestamps appended to packets as described herein, or to a packet identifier (e.g. 5 tuples and sequence number) in some embodiments. The time stamp information can be sent to servers 1012A, 1012B, and/or 1012 via an independent virtual/logical channel in some embodiments.

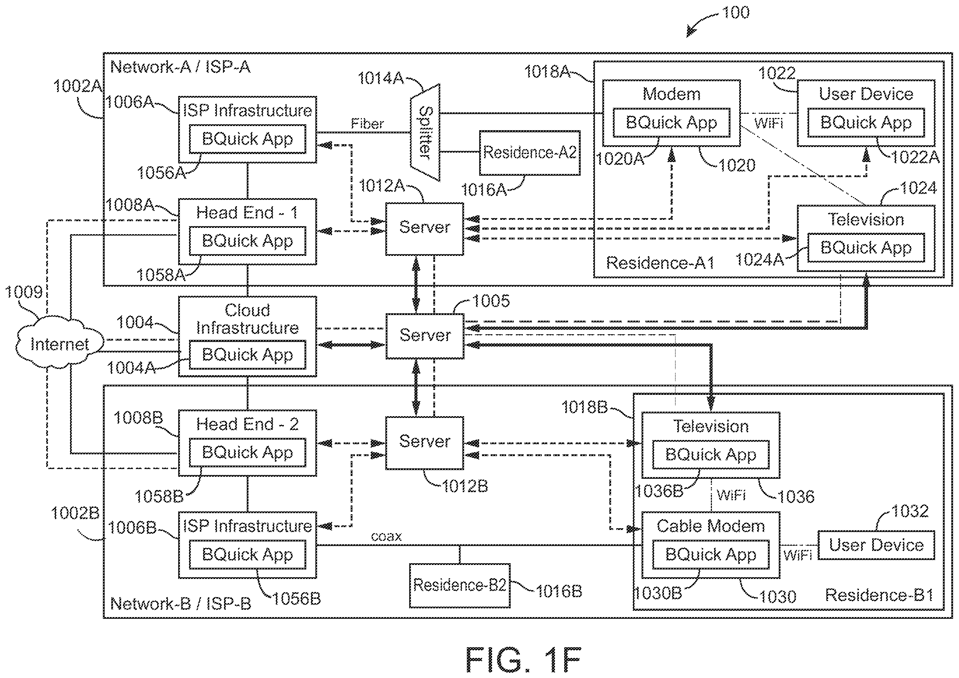

With reference to FIG. 1F, cloud infrastructure 1004 can include an application 1004A. Application 1004A is similar to applications 1030B, 1031B, 1036B, 1074B 1032B, 1034B, 1035B, 156B, and 1058B. BQUICK TOP server 1012 can be configured to monitor AR/VR applications and/or metaverse applications. An application executed on BQUICK TOP server 1012 can perform the monitoring functions. Application 1004A is in communication with BQUICK TOP server 1012. Servers 1012A and 1012B can include an application similar to application 1004A.

Using applications, 1020A, 1024A, 1030B, 1032B, 1034B, 1035B, 1036B, 1074A, and 1032B, the devices given by ISPs, customer-owned AR/VR setups, mobile phones, over the top (OTT) devices, and cloud gaming clients are capable of facilitating low latency uses. Applications, 1020A, 1024A, 1030B, 1032B, 1034B, 1035B, 1036B, 1074A, and 1032B allow devices in residences 1018A and 1018B to interact with the server extension integrated in the ONU 1020 and modems 1030 or routers (e.g., ISP provided). Additionally, the server extensions have the ability to filter and transmit all necessary information to servers 1012A and 1012B or share open data with application developers.

### C. Computing Environment

Prior to discussing the specifics of embodiments of the systems and methods of the present solution, it may be helpful to discuss the computing environments in which such embodiments may be deployed.

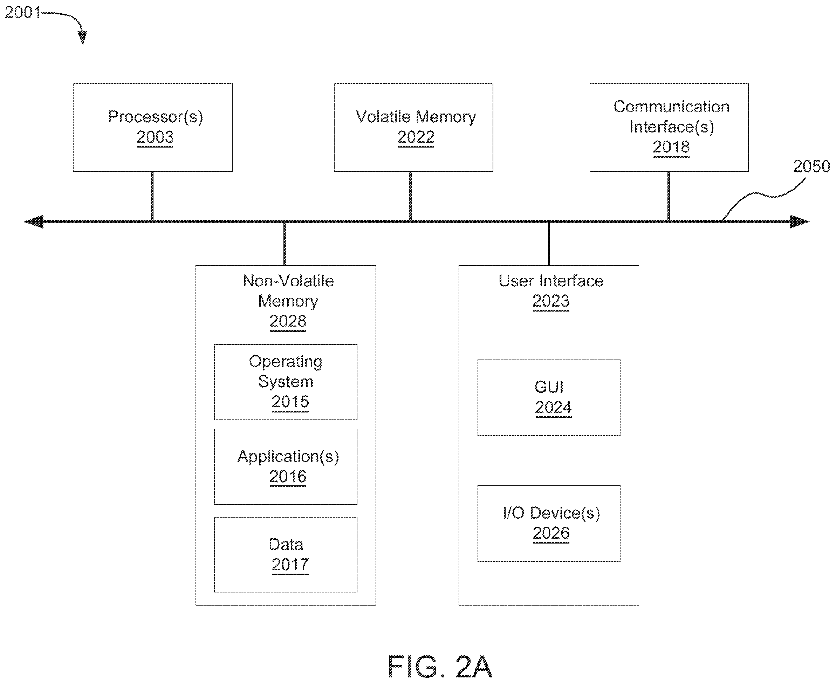

As shown in FIG. 2A, computer 2001 may include one or more processors 2003, volatile memory 2022 (e.g., random access memory (RAM)), non-volatile memory 2028 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 2023, one or more communications interfaces 2018, and communication bus 2050. User interface 2023 may include graphical user interface (GUI) 2024 (e.g., a touchscreen, a display, etc.) and one or more input/output (I/O) devices 2026 (e.g., a mouse, a keyboard, a microphone, one or more speakers, one or more cameras, one or more biometric scanners, one or more environmental sensors, one or more accelerometers, etc.). Non-volatile memory 2028 stores operating system 2015, one or more applications 2016, and data 2017 such that, for example, computer instructions of operating system 2015 and/or applications 2016 are executed by processor(s) 2003 out of volatile memory 2022. In some embodiments, volatile memory 2022 may include one or more types of RAM and/or a cache memory that may offer a faster response time than a main memory. Data may be entered using an input device of GUI 2024 or received from I/O device(s) 2026. Various elements of computer 2001 may communicate via one or more communication buses, shown as communication bus 2050.

Computer 2001 as shown in FIG. 2A is shown merely as an example, as clients, servers, intermediary and other networking devices and may be implemented by any computing or processing environment and with any type of machine or set of machines that may have suitable hardware and/or software capable of operating as described herein. Processor(s) 2003 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multicore processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 2018 may include one or more interfaces to enable computer 2001 to access a computer network such as a Local Area Network (LAN), a Wide Area Network (WAN), a Personal Area Network (PAN), or the Internet through a variety of wired and/or wireless or cellular connections.

In some implementations, the computing device 2001 may execute an application on behalf of a user of a client computing device. For example, the computing device 2001 may execute a virtual machine, which provides an execution session within which applications execute on behalf of a user or a client computing device, such as a hosted desktop session. The computing device 2001 may also execute a terminal services session to provide a hosted desktop environment. The computing device 2001 may provide access to a computing environment including one or more of: one or more applications, one or more desktop applications, and one or more desktop sessions in which one or more applications may execute.

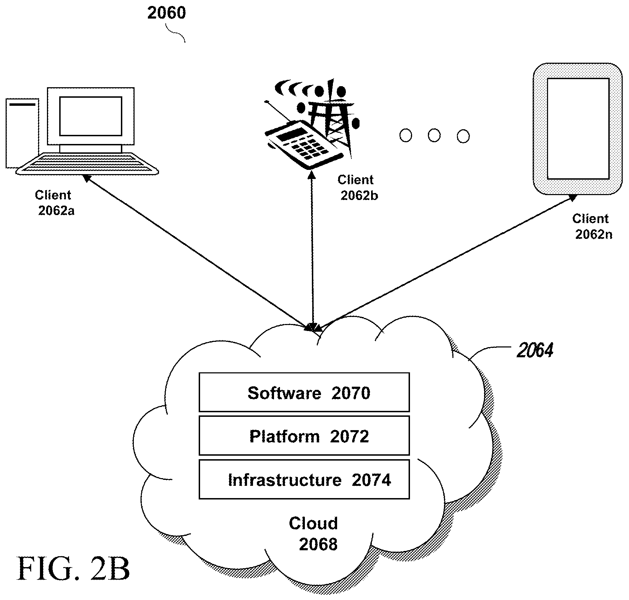

Referring to FIG. 2B, a computing environment 2060 is depicted. Computing environment 2060 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 2060 can provide the delivery of shared services (e.g., computer services) and shared resources (e.g., computer resources) to multiple users. For example, the computing environment 2060 can include an environment or system for providing or delivering access to a plurality of shared services and resources to a plurality of users through the internet. The shared resources and services can include, but not limited to, networks, network bandwidth, servers, processing, memory, storage, applications, virtual machines, databases, software, hardware, analytics, and intelligence.

In embodiments, the computing environment 2060 may provide client 2062 with one or more resources provided by a network environment. The computing environment 2062 may include one or more clients 2062a-2062n, in communication with a cloud 2068 over one or more networks 2064. Clients 2062 may include, e.g., thick clients, thin clients, and zero clients. The cloud 108 may include back end platforms, e.g., servers 106, storage, server farms or data centers. The clients 2062 can be the same as or substantially similar to computer 2001 of FIG. 2A.

The users or clients 2062 can correspond to a single organization or multiple organizations. For example, the computing environment 2060 can include a private cloud serving a single organization (e.g., enterprise cloud). The computing environment 2060 can include a community cloud or public cloud serving multiple organizations. In embodiments, the computing environment 2060 can include a hybrid cloud that is a combination of a public cloud and a private cloud. For example, the cloud 108 may be public, private, or hybrid. Public clouds 108 may include public servers that are maintained by third parties to the clients 2062 or the owners of the clients 2062. The servers may be located off-site in remote geographical locations as disclosed above or otherwise. Public clouds 2068 may be connected to the servers over a public network 2064. Private clouds 2068 may include private servers that are physically maintained by clients 2062 or owners of clients 2062. Private clouds 2068 may be connected to the servers over a private network 2064. Hybrid clouds 2068 may include both the private and public networks 2064 and servers.

The cloud 2068 may include back end platforms, e.g., servers, storage, server farms or data centers. For example, the cloud 2068 can include or correspond to a server or system remote from one or more clients 2062 to provide third party control over a pool of shared services and resources. The computing environment 2060 can provide resource pooling to serve multiple users via clients 2062 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In embodiments, the computing environment 2060 can provide on-demand self-service to unilaterally provision computing capabilities (e.g., server time, network storage) across a network for multiple clients 2062. The computing environment 2060 can provide an elasticity to dynamically scale out or scale in responsive to different demands from one or more clients 2062. In some embodiments, the computing environment 2060 can include or provide monitoring services to monitor, control and/or generate reports corresponding to the provided shared services and resources.

In some embodiments, the computing environment 2060 can include and provide different types of cloud computing services. For example, the computing environment 2060 can include Infrastructure as a service (IaaS). The computing environment 2060 can include Platform as a service (PaaS). The computing environment 2060 can include serverless computing. The computing environment 2060 can include Software as a service (SaaS). For example, the cloud 2068 may also include a cloud based delivery, e.g. Software as a Service (SaaS) 2070, Platform as a Service (PaaS) 2072, and Infrastructure as a Service (IaaS) 2074. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by Right Scale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g. DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 2062 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP and may use Representational State Transfer (REST) protocol or Simple Object Access Protocol (SOAP). Clients 2062 may access PaaS resources with different PaaS interfaces. Some PaaS interfaces use HTTP packages, standard Java APIs, Java Mail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 2062 may access SaaS resources through the use of web-based user interfaces, provided by a web browser (e.g. GOOGLE CHROME, Microsoft INTERNET EXPLORER, or Mozilla Firefox provided by Mozilla Foundation of Mountain View, California). Clients 2062 may also access SaaS resources through smartphone or tablet applications, including, e.g., Salesforce Sales Cloud, or Google Drive app. Clients 2062 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Although examples of communications systems described above may include devices operating according to an Ethernet and other standards, it should be understood that embodiments of the systems and methods described can operate according to alternative standards and use wireless communications devices other than devices configured as devices. For example, multiple-unit communication interfaces associated with cellular networks, satellite communications, vehicle communication networks, wired networks, and networks can utilize the systems and methods described herein without departing from the scope of the systems and methods described herein.

### D. Systems and Methods for Mapping High-Priority WiFi Packets to Low Latency Data Pipe

In certain network environments, data over cable service interface specification (DOCSIS) can be introduced, providing a dual pipe architecture designed to accommodate low latency criteria/requirements for supporting high-speed internet access and advanced data services to end-users. The dual pipe architecture includes a pipe (e.g., sometimes referred to as a pipeline) for low latency service flow (e.g., sometimes referred to as low latency service flow pipe or low latency pipe) and a pipe for a classic service flow (e.g., sometimes referred to as classic service flow pipe). The low latency pipe can communicate flows of data packets associated with latency-sensitive applications, such as real-time audio/video (AV), virtual simulation, gaming inputs, control signals, or other latency-sensitive flows or packets. The classic service flow pipe can communicate flows of data packets associated with other types of applications (e.g., latency-insensitive applications), such as web browsing, file downloads or uploads, email exchange, software updates, background data transfers, or other latency-insensitive flows or packets.

In some cases, such as in the context of GPON, GPON can support CBR services for upstream data transmission to facilitate low latency data exchange or low latency applications. The GPON is a telecommunications technology capable of utilizing fiber-optic cables to transmit data signals. For instance, GPON can be a fiber-optic network technology that uses passive splitters to deliver data to multiple users over a single fiber connection. In some cases, to utilize or access the low latency channels or services provided by the ISPs, users may subscribe or pay a premium for the low latency services. However, when packets arrive from a CM (e.g., a networking device connected to a network infrastructure for accessing the internet over a cable network) to a wireless communication environment or infrastructure (e.g., packets arrive at an AP on a local network for transfer via WiFi, such as at a residential home or entity), certain systems may lack the mechanisms to distinguish between packets from user-controlled low latency data pipe or packets from the classic data pipe. In other words, when switching from cable (e.g., CM) to WiFi (e.g., AP), latency-related information of the packets may be discarded/stripped out or may not be translated over to the WiFi environment. In such cases, one or more devices within the local network, e.g., the AP, router, mesh nodes, etc., may not support identifying latency-sensitive packets and may not perform low latency management for the latency-sensitive flows. Hence, the systems and methods of the technical solution can provide features and operations discussed herein to map high-priority WiFi packets to low latency data pipe.

The systems and methods of the technical solution can provide various features, functionalities, or mechanisms to allow or ensure that each packet from a low latency pipe is mapped or communicated to a high-priority queue (e.g., the highest priority queue) or a dedicated low latency queue within the WiFi network infrastructure. The WiFi network infrastructure can support wireless communication between wireless communication devices, e.g., client devices or UE. Mapping packets from the low latency pipe can enhance or optimize low latency services to the client devices (e.g., the end users) by allowing the prioritization of low latency packet delivery using the high-priority queue or low latency queue.

For example, in at least the context low latency DOCSIS, the systems and methods of the technical solution can expose or provide accessibility of the service flow number of each Ethernet packet to WiFi drivers, e.g., allow at least one WiFi device (or network infrastructure device) to access the service flow number for low latency management, such as queue mapping, among other techniques not limited to those discussed herein. The service flow number can refer to a (unique) identifier (ID) assigned to a respective data flow within the DOCSIS to distinguish between different types of traffic (e.g., latency-sensitive flows and latency-insensitive flows). The WiFi drivers can include or correspond to software components interfacing WiFi hardware components (e.g., network interface cards (NICs)) to the operating system of the WiFi-enabled device, such as a router, an access point, or a modem, to name a few. The systems and methods can use the service flow number to distinguish between latency-sensitive flows and latency-insensitive flows.

In another example, the systems and methods can monitor packet information, such as 4-tuples or 5-tuples, etc., for each incoming packet from the low latency pipe at a CMTS or the CM. The CMTS can include or correspond to network equipment managed by the ISP and configured to route or manage data traffic between the ISP and the CM of at least one end-user. The systems and methods can continuously or periodically update information associated with packets from the low latency pipe to devices at the local network, such as a WiFi AP (e.g., sometimes referred to generally as an AP) or station (STA) devices, among others. The STA devices can include or refer to devices capable of connecting to, for instance, the AP or routers to access network resources and services, including but not limited to a laptop, a desktop computer, a gaming console, a smart television, a smartphone, or other client devices. The systems and methods can provide or update packet information from low latency pipe at the local network devices to allow the devices to distinguish between different types of packets or flows at the local network. By distinguishing the different types of traffic at the local network, the systems and methods (e.g., the AP, router, etc.) of the technical solution discussed herein can apply one or more specific QoS parameters (e.g., prioritization or traffic shaping) or perform low latency services or management for data packets communicated from the CM to the WiFi network infrastructure at the local network, thereby improving communication latency to or from the local network and enhancing the efficiency of the low latency system.

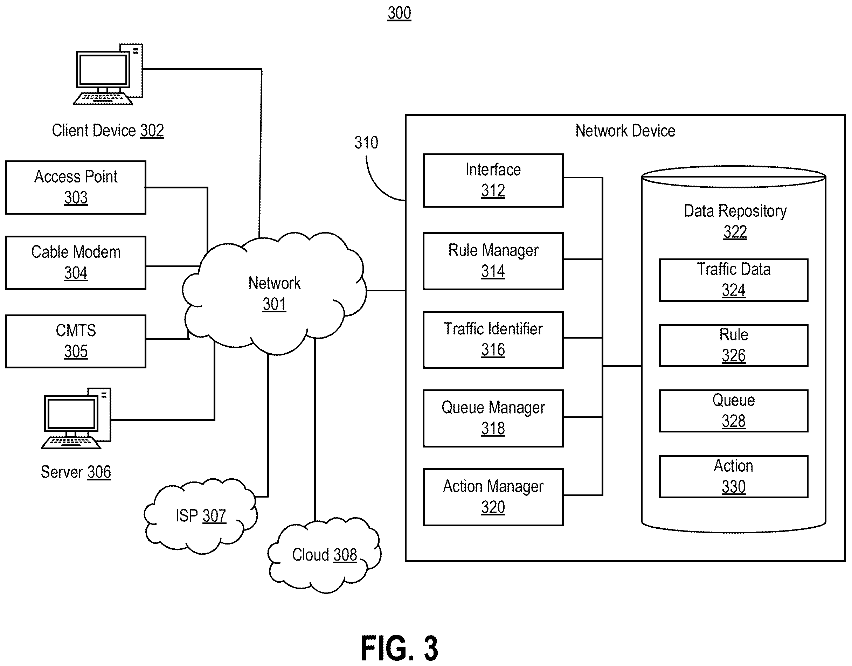

FIG. 3 depicts a block diagram of one embodiment of a system 300 for mapping high-priority WiFi packets to low latency data pipe. The system 300 can include at least one network 301, at least one client device 302, at least one access point 303, at least one cable modem 304, at least one cable modem termination system (CMTS) 305, at least one server 306, at least one internet service provider (ISP) 307, at least one cloud 308, and at least one network device 310. These elements can be referred to generally as one or more components, elements, entities, or devices of the system 300. The system 300 can utilize the features and functionalities of one or more components to perform at least one of monitoring network data flows (e.g., sometimes referred to generally as flows) or data packets, processing data packets, obtaining packet information, determining whether individual flows of packets are from low latency service flow pipe or classic service flow pipe, providing access to latency service flow information, providing low latency services, or performing low latency management, to name a few. Each component can receive, transfer, or otherwise communicate information with other components of the system 300 via the network 301. The network device 310 can correspond to or be referred to as a computing device, a data processing system, an intermediary device, a local network device, a latency management system, or a latency service entity.

In some implementations, the network device 310 can include, correspond to, or be a part of at least one other component of the system 300, such as the client device 302, the access point 303, the cable modem 304, the CMTS 305, the server 306, or the ISP 307, among other networking devices. In some other implementations, the network device 310 can be a different component or an independent component from the client device 302, the access point 303, the cable modem 304, the CMTS 305, the server 306, the ISP 307, or the cloud 308. It should be noted that the features or functionalities of the network device 310 may be performed by or implemented in one or more devices within the network 301 (or one or more components of the system 300), such as the features of the access point 303, cable modem 304, CMTS 305, server 306, etc.

In some implementations, one or more components of the system 300 can include, correspond to, or be in communication with one or more components of the communication system 100, as described in conjunction with at least one of FIGS. 1A-F. For example, the client device 302 can include or correspond to at least one of the user device 1022, 1032, television 1024, 1034, game controller 1038, etc. The cable modem 304 can include or correspond to at least one of modem 1020, cable modem 1030, etc.

In further examples, the server 306 can include or correspond to the latency server 1005. In some cases, the server 306 may include or correspond to other servers, such as the server 1012A, 1012B. The ISP 307 can include or correspond to at least one of the ISP infrastructure 1006A, 1006B, etc. The cloud 308 can include or correspond to at least the cloud infrastructure 1004, for example. The network device 310 can include or correspond to at least one of the components of the system 300 or the communication system 100, such as at least one of the server 1005, 1012A, 1012B, modem 1020, cable modem 1030, set top box 1036, etc. In some cases, the features or functionalities of certain components of the system 300 (or the communication system 100), such as one or more of the access point 303, cable modem 304, CMTS 305, server 306, etc., can be implemented, aggregated, or combined into a single device, e.g., the network device 310. In some other cases, the features or functionalities of one or more components of the network device 310 can be separated to or implemented on a plurality of components of the system 300 (or the communication system 100), such as to the access point 303, cable modem 304, CMTS 305, server 306, etc.

In some examples, the one or more components (e.g., access point 303, cable modem 304, CMTS 305, or server 306) of the system 300 can include or be installed with a latency application. The latency application included at least one of the latency applications 1004A, 1056A, 1056B, 1058A, 1058B, etc., such as described in conjunction with FIGS. 1A- F. The latency application can refer to an agent of the component or device. One or more components of the network device 310 can include features or functionalities of, correspond to, or be in communication with one or more devices within the communication system 100. For example, a rule manager (e.g., rule manager 314) of the network device 310 can correspond to or be in communication with the CMTS 305 or the server 306. A traffic identifier (e.g., the traffic identifier 316) of the network device 310 can be in communication with the CMTS 305 to identify or monitor traffic. A queue manager (e.g., queue manager 318) of the network device 310 can include or correspond to the access point 303 and be in communication with the client device 302. An action manager (e.g., action manager 320) of the network device 310 can include or correspond to the access point 303 configured to perform low latency management or provide low latency services. Other components of the network device 310 can include or be in communication with other components of the system 300 or the communication system 100, not limited to those discussed herein.

The one or more components (e.g., client device 302, access point 303, cable modem 304, CMTS 305, server 306, ISP 307, cloud 308, or network device 310) discussed herein can include or be implemented in hardware, or a combination of hardware and software, in one or more embodiments. Each component of the system 300 may be implemented using hardware or a combination of hardware or software detailed above in connection with at least one of FIGS. 1A-F and 2A-B. For instance, each of these components can include any application, program, library, script, task, service, process, or any type and form of executable instructions executing on the hardware of the respective component to perform the features, functionalities, or operations discussed herein. The hardware includes circuitry such as one or more processors in one or more embodiments.

The network 301 can include computer networks such as the Internet, local, wide, metro or other area networks, intranets, satellite networks, other computer networks such as voice or data mobile phone communication networks, and combinations thereof. The components of the system 300 can communicate with each other via the network 301, for example, the network device 310 can communicate with at least one of the client device 302, access point 303, cable modem 304, CMTS 305, server 306, ISP 307, or cloud 308. The network 301 may be any form of computer network that can relay information between the network devices or components within the system 300, amongst others. In some implementations, the network 301 may include the Internet and/or other types of data networks, such as a local area network (LAN), a wide area network (WAN), a cellular network, a satellite network, or other types of data networks. The network 301 may also include any number of computing devices (e.g., computers, servers, routers, network switches, etc.) that are configured to receive and/or transmit data within the network 301. The network 301 may further include any number of hardwired and/or wireless connections. Any or all of the computing devices described herein (e.g., client device 302, access point 303, cable modem 304, CMTS 305, server 306, ISP 307, cloud 308, or network device 310, etc.) may communicate wirelessly (e.g., via WiFi, cellular, radio, etc.) with a transceiver that is hardwired (e.g., via a fiber optic cable, a CAT5 cable, etc.) to other computing devices in the network 301. Any or all of the computing devices described herein (e.g., client device 302, access point 303, cable modem 304, CMTS 305, server 306, ISP 307, cloud 308, or network device 310, etc.) may also communicate wirelessly with the computing devices of the network 301 via a proxy device (e.g., a router, network switch, or gateway). In some cases, the network 301 may include one or more hardwired connections between a number of components within the system 300, such as between the cable modem 304 and the CMTS 305, the cable modem 304 and the access point 303, the cable modem 304 and the network device 310, the CMTS 305 and the network device 310, etc.

The system 300 can include one or more client devices 302 communicatively coupled to the network 301. Each of the client devices 302 can include at least one processor and a memory, e.g., a processing circuit. The memory can store processor-executable instructions that, when executed by processor, cause the processor to perform one or more of the operations described herein. The processor can include a microprocessor, an application-specific integrated circuit (ASIC), a field-programmable gate array (FPGA), etc., or combinations thereof. The memory can include, but is not limited to, electronic, optical, magnetic, or any other storage or transmission device capable of providing the processor with program instructions. The memory can further include a floppy disk, CD-ROM, DVD, magnetic disk, memory chip, ASIC, FPGA, read-only memory (ROM), random-access memory (RAM), electrically erasable programmable ROM (EEPROM), erasable programmable ROM (EPROM), flash memory, optical media, or any other suitable memory from which the processor can read instructions. The instructions can include code from any suitable computer programming language. The client devices 302 can include or correspond to one or more computing devices or network devices that can perform various functions as described herein. The one or more client devices 302 can include any or all of the components and perform any or all of the functions of at least one of the user/client devices 1022, 1032, 2062 described herein in conjunction with at least one of but not limited to FIGS. 1A-2B. In some cases, the one or more client devices 302 may include or correspond to the user/client devices 1022, 1032, 2062, such as described in conjunction with at least one of FIGS. 1A-2C. The one or more client devices 302 may include other devices associated with a residence, such as the television 1024, 1034, set top box 1036, game controller 1038, or other devices of at least one residence 1018A, 1018B described in conjunction with at least one of FIGS. 1A-F. Each residence 1016A, 1016B, 1018A, 1018B can represent a local network of respective one or more client devices 302, such that the wireless connection of the one or more client devices 302 can be managed or provided by the respective modem (or cable modem) 1020, 1030 (or the latency application 1020A, 1030A of the respective modem 1020, 1030) of the local network.

Each client device 302 can include, but is not limited to, a television device, a mobile device, smart phone, personal computer, a laptop, a gaming device, a kiosk, or any other type of computing device. Each client device 302 can be implemented using hardware or a combination of software and hardware. Each client device 302 can include or be installed with one or more applications, which can allow an operator or user of the device to perform application specific tasks, such as sending messages, accessing websites, streaming audio or video content, executing a VR/AR simulations, etc.

The one or more application can refer to software programs executable on the client device 302. The one or more applications can be managed or hosted by a third-party entity or a remote device, such as by the cloud 308. The one or more applications may be executed by the respective client device 302 to establish a communication session or allow the exchange of data with one or more network devices via the network 301, e.g., communication with the ISP 307, the cloud 308, or the network device 310, among other components of the system 300.

The application executed by the client device 302 can be a low latency application or other types of application. Low latency applications can refer to any application configured to deliver data or receive responses with reduced or minimized delay or latency. When executing the low latency applications on the client device 302, the end-user (e.g., operator of the client device 302) may expect to receive real-time data or response with reduced or minimized delay or latency. Low latency applications may sometimes be referred to as latency-sensitive applications. Examples of low latency applications can include those providing various latency-sensitive functionalities, such as but not limited to teleconference, video or audio stream, gaming, or virtual simulations, to name a few. Other types of applications, e.g., non-low latency applications, can refer to or be any application that does not prioritize real-time interactions or may tolerate relatively longer delays between the client device 302 and the cloud 308 (or other remote devices). Examples of non-low latency applications can include non-latency-sensitive functionalities such as but not limited to email, document editing software, social media platforms, or file storage. For purposes of providing examples herein, the application executed by the client device 302 can be a low latency application or a non-low latency application. Flows of packets for the low latency application can be communicated via the low latency service flow pipe and flows of packets for the non-low latency application can be communicated via the classic service flow pipe, in the context of DOCSIS, for example.

Each client device 302 can include a display device that can provide visual information, such as information presented as a result of executing instructions stored in the memory of the client device 302. The display device can include a liquid-crystal display (LCD) device, an organic light-emitting diode (OLED) display, a light-emitting diode (LED) display, a bi-stable display (e.g., e-ink, etc.), amongst others. The display device can present one or more user interfaces to on various regions of the display in accordance with the implementations described herein. In some implementations, the display device can include interactive elements, such as a capacitive or resistive touch sensors. Thus, the display device can be an interactive display (e.g., a touchscreen, a display, etc.), and can include one or more input/output (I/O) devices or interfaces. Each client device 302 can further include or be in communication with (e.g., via a communications bus coupled to the processors of the client devices 302, etc.) one or more input devices, such as a mouse, a keyboard, or digital keypad, among others. The display can be used to present one or more applications as described herein, such as web browsers, emails, social network applications, video or audio streams, VR or AR simulations, gaming applications, etc. The display can include a border region (e.g., side border, top border, bottom border). The inputs received via the input/output devices (e.g., touchscreen, mouse, keyboard, etc.) can be detected by one or more event listeners, and indicate interactions with one or more user interface elements presented on the display device of the client devices 302. The interactions can result in interaction data, which can be stored and transmitted by the processing circuitry of the client device 302 to other computing devices, such as those in communication with the client devices 302. The interaction data can include, for example, interaction coordinates, an interaction type (e.g., click, swipe, scroll, tap, etc.), and an indication of an actionable object with which the interaction occurred. Thus, each client device 302 can allow/enable a user to interact with and/or select one or more actionable objects presented as part of graphical user interfaces to carry out various functionalities as described herein.

The system 300 can include at least one access point 303. The access point 303 can include or correspond to a networking device configured to provide wireless communication for wireless communication devices (e.g., the client devices 302) to connect to a wired network (e.g., connection to the cable modem 304) using WiFi technology. The access point 303 can behave as or provide features of a central hub for wireless communication, for instance, thereby allowing the client devices 302 to access the network 301 and the internet without a wired connection. In some cases, the access point 303 can correspond to or include features or functionalities of the access point 1031, such as described in conjunction with at least FIG. 1B. In some cases, the access point 303 may be in communication with the modem 1020 or the cable modem 1030 of the communication system 100 to provide wireless communication channels to the one or more client devices 302, such as described in conjunction with at least one of FIGS. 1A-F.

Examples of the access point 303 can include but are not limited to at least one of WiFi router, mesh WiFi system, wireless range extender or repeater, wireless bridge, WiFi-enabled network switch, hotspot device, etc. The access point 303 can receive a request to establish a wireless connection from the client device 302. The access point 303 can grant or deny the request in response to performing at least one suitable authentication technique (e.g., confirm username, password, device ID, or other form of identification of the client device 302. The access point 303 can broadcast wireless signals within a coverage range for detection by the wireless communication devices. For purposes of providing examples, the access point 303 can provide wireless signals for the client devices 302 within a local network (e.g., within at least one respective residence 1016A, 1016B, 1018A, 1018B). The access point 303 can assign an IP address to the client device 302 authenticated to connect to the network 301 via the access point 303. Responsive to authenticating the client device 302, the access point 303 can provide a communication channel for the client device 302 in the local network to communicate with other devices remote from the local network.

In some cases, the access point 303 can include or be installed with a latency application (e.g., latency application 502). The latency application of the access point 303 can include features or functionalities of at least one of the latency applications 1056A, 1056B, 1058A, 1058B, 1020A, 1020B, etc., such as described in conjunction with at least one of FIGS. 1A-F. The access point 303 can communicate with the server 306 (e.g., latency server 1005) or other servers via the latency application. For example, the latency application executing on the access point 303 can transmit or receive information data to or from the server 306. The access point 303 can relay information regarding the local network to the server 306, such as local network status, statistics (e.g., latency, traffic volume, packet loss, bandwidth utilization, error rates), etc. The information regarding the local network can be used for low latency services or low latency management by the server 306, the access point 303, or other devices within the network 301. In some cases, the access point 303 can be in communication with at least one other device including or configured with the latency application, such that the access point 303 can communicate with the server 306 (or other latency servers) via the other device as an intermediary, for example.

The system 300 can include at least one cable modem 304. The cable modem 304 (e.g., sometimes referred to generally as a modem) can include or correspond to a networking device that allows/enables the access point 303 (e.g., router) or the client device 302 to connect to the internet over a cable network. The cable modem 304 can facilitate bidirectional data transmission between the local network and the ISP 307, for instance, by modulating and demodulating signals over the cable infrastructure. The cable modem 304 may incorporate features such as at least one of but not limited to DOCSIS compatibility (e.g., communicatively coupled to the CMTS 305) for standardized communication with the ISP network, Ethernet ports for connecting to local devices, or support for various internet protocols to provide data exchange capability, among features or functionalities not limited to those discussed herein.

The cable modem 304 can include, correspond to, or provide features of at least one of the modem 1020 or the cable modem 1030, such as described in conjunction with at least one of FIGS. 1A-F. In some implementations, the cable modem 304 can include or be installed with a latency application, such as similar to at least one of the latency applications 1020A, 1030A, etc. The latency application executable on the cable modem 304 can be configured to communicate with the server 306 (e.g., latency server) or other servers. In some cases, the cable modem 304 can be in communication with at least one other device including or installed with the latency application to provide communication with the server 306, among other servers.

The cable modem 304 can operate in conjunction with the access point 303 to provide network access to one or more client devices 302 or allow wired or wireless connection between the client devices 302 and one or more remote devices, such as connection to the ISP 307 or the cloud 308. In some cases, the cable modem 304 and the access point 303 can be included or combined as part of a single device, e.g., a gateway or a modem-router device, for example. For purposes of providing examples herein, the cable modem 304 and the access point 303 can be separate devices or components within the system 300, where the access point 303 can provide wireless connection for the client devices 302 for wired data exchange to the cable modem 304, and the cable modem 304 communicating with the access point 303 via a wired connection can relay data packets between the access point 303 and the cable modem termination system (CMTS) 305 or the ISP 307, for example.

The system 300 can include at least one CMTS 305. The CMTS 305 can be configured to provide bidirectional communication between the cable modem 304 (or other cable modems) and the ISP 307. The CMTS 305 can provide features or functionalities of a gateway, managing or controlling flows of data packets between the cable modem 304 and the ISP (core) network. The ISP network can refer to an infrastructure owned or operated by the ISP 307 (e.g., ISP infrastructure 1006A, 1006B). For purposes of providing examples, the CMTS 305 can be an intermediary device that interfaces or manages communication between at least one device within the local network (e.g., the cable modem 304) and the ISP network.

For example, the CMTS 305 can interface with cable modem 304 to establish a (wired) connection. The CMTS 305 can perform signal modulation and demodulation, protocol conversion, or other functionalities for packets to or from the cable modem 304. The CMTS 305 can interact or interface with the server 306 or other servers, allowing the exchange of data packets between the local network (e.g., packets from the cable modem 304) and external servers or cloud services.

The CMTS 305 can include one or more components, such as but not limited to a downstream interface, upstream interface, quadrature amplitude modulation (QAM) modulator or demodulator, DOCSIS protocol processing, or routing and switching. For example, the downstream interface can refer to a component receiving flows of packets from the ISP network (e.g., ISP 307) and transmitting the packets downstream to the cable modem 304. The upstream interface can refer to a component receiving data packets from the cable modem 304 and transmitting the packets upstream to the ISP network. The QAM modulator/demodulator can refer to at least one device that modulates digital data into radio frequency signals for transmission over the cable network (e.g., downstream) and demodulates incoming signals from the cable modem 304 (e.g., upstream).

In further examples, the CMTS 305 can implement the data over cable service interface specification (DOCSIS), e.g., a set of standards governing the transmission of data over cable networks. The DOCSIS protocol processing can refer to a component that processes DOCSIS messages exchanged between the cable modem 304 and the ISP network. In other words, the CMTS 305 may incorporate features of the DOCSIS compatibility (e.g., communicatively coupled to the CMTS 305) for standardized communication with the ISP network and/or the cable modem 304. The routing and switching functionalities can involve directing data packets between the cable modem 304 and the destinations specified by the packets within the ISP network.

In some implementations, the CMTS 305 can be an intermediary device (not shown) between at least one of the ISPs 1006A, 1006B and one or more the residences 1016A, 1016B, 1018A, 1018B, such as described in conjunction with at least one of but not limited to FIGS. 1A-F. In some other implementations, the CMTS 305 can be a part of at least one of the ISP infrastructures 1006A, 1006B to facilitate data communication or exchange between the ISP network and the local network (e.g., the cable modem 304).

The system 300 can include at least one server 306. The server 306 can be a computing device, including one or more processors and memory. The server 306 can be composed of hardware, software, or a combination of hardware and software components. In some implementations, the server 306 can include, correspond to, or be a part of the server 1005 (e.g., the latency server), such as described in conjunction with at least one of FIGS. 1A-F. In this case, the server 306 can manage data transmission for low latency applications or real-time applications. For example, the server 306 can provide (low) latency services or management for one or more devices including the respective latency application within the network 301. The server 306 can provide low latency services for the access point 303 (e.g., including the latency application) or the network device 310. In some cases, the server 306 can provide one or more configurations, rules, or criteria for the access point 303 or the network device 310 to perform low latency services or management for the local network devices (e.g., the client devices 302).

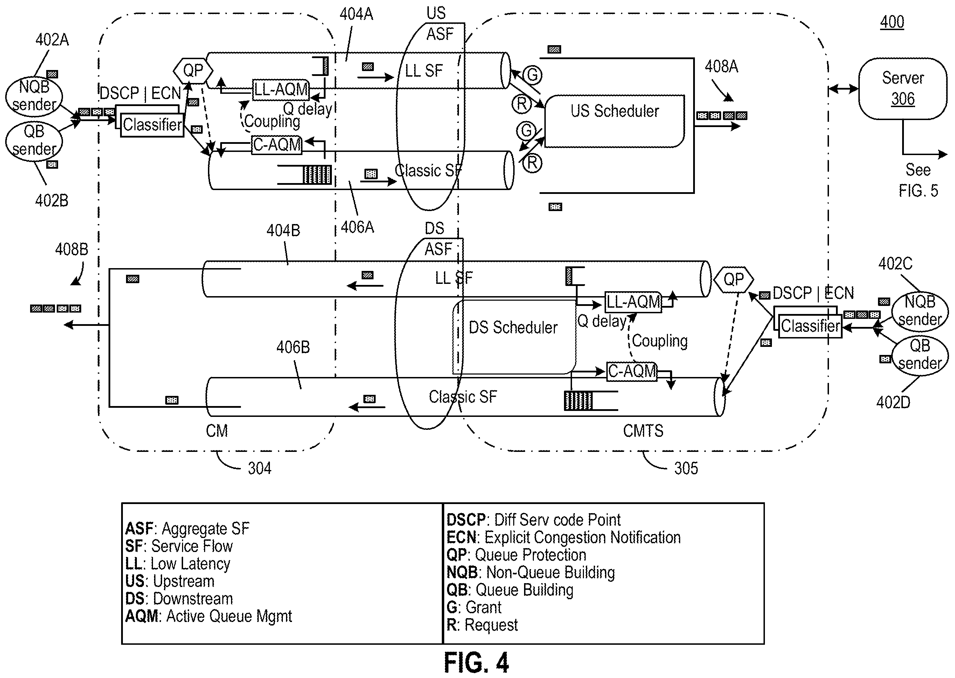

The server 306 can monitor traffic at the CMTS 305 (or the cable modem 304). The CMTS 305 can include or execute a latency application for communication with the server 306. For example, as traffic (e.g., data packets) arrives from the ISP network to the CMTS 305, the server 306 can monitor and obtain at least a portion of the packets at the CMTS 305 to perform low latency services discussed herein, such as determining the type of flows (e.g., latency-sensitive flows from the low latency pipe or latency-insensitive flows from the classic pipe in the DOCSIS network or environment) and providing latency service flow information or one or more classification rules for classifying the flows of packets to the network device 310 (or the access point 303). In some cases, the server 306 can initiate an application programming interface (API) call to request information or packets from the CMTS 305 via the API of the CMTS 305, for example. The features or operations of the server 306 can be described in conjunction with at least one of but not limited to FIGS. 4-5.

In some cases, the server 306 can include, correspond to, or be a part of other servers, such as at least one of servers 1012A, 1012B, as described in conjunction with at least one of FIGS. 1A-F. The server 306 may be one of a plurality of servers 306. The server 306 can be an intermediary device between the ISP 307 and at least one other server (e.g., the latency server 1005), between the plurality of servers, or between the ISP 307 and the cloud 308, for example. In some cases, the server 306 can provide the client device 302 with access to information or services of the cloud 308. For instance, the server 306 can receive a request for accessing information or services provided by the cloud 308. The server 306 can be configured to approve or reject the received request using at least one suitable authentication technique or send the request from the client for approval by the cloud 308. The server 306 may receive or retrieve data from the cloud 308, and relay the data to the client device 302 via at least one of the ISP 307, the CMTS 305, the cable modem 304, the access point 303, or the network device 310, for example. In some aspects, the server 306 can be a part of the cloud 308.

In some configurations, the server 306 can include a latency application configured to communicate or exchange data with at least the latency server 1005, where the latency server 1005 can provide latency service flow information to the latency application, network device 310 or the access point 303 to manage low latency services at the local network. For example, the server 306 executing the latency application can be in communication with the CMTS 305 to monitor and obtain at least a portion of the incoming traffic or packets. The latency application executing on the server 306 can relay or forward the monitored packets to the latency server 1005 to process the packets and determine whether the packets are for the low latency pipe (e.g., low latency service flow pipe) or the classic pipe (e.g., classic service flow pipe), e.g., whether to perform low latency service for the flow of packets. In some cases, the application executing on the server 306 can process the packets to determine whether to perform low latency service for the flow of packets and report the determination (e.g., information regarding the latency-sensitive packets) to the latency server 1005, for example. In such cases, the latency server 1005 can provide or update latency service flow information (or one or more classification rules) to the network device 310, the access point 303, or other local network devices managing low latency services for the client device 302.

In some implementations, the server 306 can deliver various services to the client devices 302 for the ISP 307. The server 306 can be configured as a central hub responsible for managing and routing internet traffic for subscribers. The server 306 can handle requests from users such as accessing websites, sending emails, streaming content, or downloading files. The server 306 can manage network protocols, assign IP addresses, or facilitate communication between different devices in the network 301.

The system 300 can include at least one ISP 307. The ISP 307 can correspond to or include one or more devices controlled by companies providing internet service to individuals and businesses. The ISP 307 can include at least one processor and a memory, such as described in conjunction with the processor and memory of the client device 302, among other devices within the system 300. The ISP 307 can include any or all of the components and perform any or all of the functions of at least one of the ISP infrastructures 1006A, 1006B described herein in conjunction with at least one of but not limited to FIGS. 1A-F. In some cases, the ISP 307 may correspond to at least one of the ISP infrastructures 1006A, 1006B, such as described in conjunction with at least one of FIGS. 1A-F, for example.

The ISP 307 can include or be composed of hardware, software, or a combination of hardware and software components. The ISP 307 can include or correspond to at least one device, such as but not limited to data centers, switches, coaxial cables, fiber optic cables, or other networking equipment. The ISP 307 can be an intermediary device between one or more devices within the network 301, such as between the CMTS 305 and the cloud 308, or the CMTS 305 and the server 306, among other devices, for example.

The ISP 307 can facilitate communication by providing connectivity between the network devices. For example, the ISP 307 can route or forward packets received form the CMTS 305 or the cable modem 304 to the packet destination, e.g., to the server 306 or the cloud 308. The destination can be indicated in the data packets of the data flows. In another example, the ISP 307 can route data transmission from at least the cloud 308 to the CMTS 305 or at least one device associated with the local network, such as the cable modem 304 or the client device 302 according to the destination of the flows of packets.

In some configurations, the ISP 307 can manage the data transmission by executing at least one load balancing technique, maintaining QoS, implementing traffic shaping techniques (e.g., regulating data transmission rate) to prioritize certain data flows (e.g., critical or high-priority data flows), filtering packets, performing error detection or correction, etc. The ISP 307 can perform other features or functionalities not limited to those discussed herein to ensure the successful exchange of information between network devices. In some implementations, the ISP 307 can be an entity managing one or more devices within the network 301, such as the CMTS 305.

In some arrangements, the system 300 can include multiple ISPs 307. Each ISP 307 can provide network services to a respective group of client devices 302 or one or more local networks, e.g., one or more of residences 1016A, 1016B, 1018A, 1018B. For example, a first ISP can facilitate communication between a first group of client devices 302 and at least the cloud 308. A second ISP can facilitate communication between a second group of client devices 302 and at least the cloud 308.

The system 300 can include at least one cloud 308. The cloud 308 can include at least one processor and a memory. The cloud 308 can be referred to as a cloud service, a cloud storage service, a third-party resource provider, or a resource distributor. The cloud 308 can include any or all of the components and perform any or all of the functions of at least the cloud infrastructure 1004 described herein in conjunction with at least one of but not limited to FIGS. 1A-F. In some cases, the cloud 308 may correspond to at least the cloud infrastructure 1004, such as described in conjunction with at least one of FIGS. 1A-F.

For example, the cloud 308 can include a collection of hardware, software, networking, and other resources that allow the delivery of cloud computing services over the internet in some embodiments. The cloud 308 can include physical servers, storage devices, networking equipment, and other hardware components hosted in data centers distributed across multiple geographic locations in some embodiments. The cloud 308 can be configured to provide high-speed, redundant network links, routers, switches, and content delivery networks (CDNs) for the delivery of low-latency, high-bandwidth content for users in some embodiments. The cloud 308 can include block storage (e.g., Amazon EBS, Azure Disk Storage), object storage (e.g., Amazon S3, Google Cloud Storage), and file storage (e.g., Amazon EFS, Azure Files) in some embodiments.

In some implementations, the cloud 308 can include a remote data storage configured to store information or provide services for one or more devices within the network 301, such as for the server 306, the client device 302, etc. The cloud 308 may provide access to the remote data storage for the server 306. The cloud 308 can be communicatively coupled to the one or more devices within the network 301. The cloud 308 can communicate with the client device 302 through at least one of the ISP 307, the CMTS 305, the cable modem 304, the access point 303, the network device 310, etc. In some cases, the cloud 308 can provide the resources to the one or more applications executed on the client device 302 (or other client devices 302).

In various implementations, the latency application discussed herein can be any type of application installed or executed on one or more devices of the system 300 or the communication system 100 to provide low latency services for at least the local network or communicate information to at least the server 306 (or the latency server 1005) to perform low latency services, such as the latency application discussed in connections with Figures 1A-1F. The latency application can refer to software programs or services executing on the respective devices. One or more devices including or installed with the latency application can communicate with the server 306 (or the latency server 1005). For purposes of providing examples, at least one of the access point 303, cable modem 304, or CMTS 305 can include the latency application and can be in communication with the server 306 (or the latency server 1005).

In some cases, performing the low latency services (e.g., by the server 306) can involve, for example, at least providing latency service flow information (e.g., one or more classification rules) to the network device 310 or the access point 303 to perform low latency services in the local network. For example, the server 306 can allow or provide the network device 310 or the access point 303 that performs low latency services for the local network with access to latency service flow information. The latency service flow information can refer to latency information of the respective flows of packets (e.g., latency-sensitive or latency-insensitive), the pipe (e.g., low latency pipe or classic pipe) of the DOCSIS network communicating the flows of packets, or other information distinguishing or indicative of low latency flows or packets.

The system 300 can include at least one network device 310 for mapping high-priority WiFi packets to low latency data pipe. The network device 310 can include at least one processor and a memory, e.g., a processing circuit. The memory can store processor-executable instructions that, when executed by the processor, cause the processor to perform one or more of the operations described herein. The processor may include a microprocessor, an application-specific integrated circuit (ASIC), a field-programmable gate array (FPGA), etc., or combinations thereof. The memory may include, but is not limited to, electronic, optical, magnetic, or any other storage or transmission device capable of providing the processor with program instructions. The memory may further include a floppy disk, CD-ROM, DVD, magnetic disk, memory chip, ASIC, FPGA, read-only memory (ROM), random-access memory (RAM), electrically erasable programmable ROM (EEPROM), erasable programmable ROM (EPROM), flash memory, optical media, or any other suitable memory from which the processor can read instructions. The instructions may include code from any suitable computer programming language. The network device 310 can include one or more computing devices or servers that can perform various functions as described herein. The network device 310 can include any or all of the components and perform any or all of the functions of the computer 2001 described herein in conjunction with at least FIG. 2A.

In some configurations, the network device 310 can include components and perform any or all of the features and functionalities of at least one of the access point 303, the cable modem 304, the CMTS 305, the server 306, the ISP 307, the cloud 308, or other devices within the network 301. In some configurations, the network device 310 can include, correspond to, or be a part of at least one of the access point 303, the cable modem 304, the CMTS 305, the server 306, the ISP 307, or the cloud 308. In some cases, one or more components of the network device 310 can correspond to or be a part of at least one of the access point 303, the cable modem 304, the CMTS 305, the server 306, the ISP 307, or the cloud 308. For example, the features or operations of the network device 310 for mapping high-priority packets (e.g., low latency packets) to low latency data pipe can be performed by at least one of the access point 303, the cable modem 304, the CMTS 305, the server 306, the ISP 307, or the cloud 308 to perform low latency management.

Mapping high-priority packets to the low latency data pipe can refer to or involve determining or classifying information (e.g. 4-tuple, 5-tuple or service flow number) associated with incoming flows of packets that arrive at the CMTS 305 or the cable modem 304 as being from the low latency pipe, e.g., of DOCSIS network. Performing low latency management or providing low latency services can refer to or involve executing at least one action or technique to improve or minimize the latency of delivering data packets to the client devices 302 of the local network, such as but not limited to disabling aggregation, bypassing mesh nodes, or communicating packets to high-priority queue or regular queue, among others.

In some scenarios, the features or functionalities of the one or more components of the network device 310 can be performed by the one or more components of the system 300, such as the access point 303, the cable modem 304, the CMTS 305, or the server 306. For example, the components of the network device 310 can correspond to or be a part of multiple devices or separate entities in the network 301 to perform the features or operations discussed herein. In some other scenarios, the features or functionalities of the one or more components of the system 300, such as at least one of the access point 303, the cable modem 304, the CMTS 305, or the server 306, can be a part of or executed by the network device 310, e.g., certain components may be a part of the same device or entity.

For purposes of providing examples, the features or functionalities of the network device 310 can be performed by the access point 303, or vice versa, such that the network device 310 may correspond to the access point 303. For example, the network device 310 may be operated in the local network to provide wireless access or perform low latency services for the client devices 302 at the local network. The network device 310 may correspond to other devices operated in the local network, such as a router, a switch, a gateway, etc. In some cases, the network device 310 may be coupled to or in communication with the access point 303, such as to exchange information with the access point 303. The network device 310 may include or be installed with a latency application, such as similar to the latency application 1056A, 1056B, 1058A, 1058B, etc., configured to communicate with the server 306 (e.g., the latency server 1005).

The network device 310 can include an interface 312. The interface 312 can transfer data between one or more components of the network device 310, such as rule manager 314, traffic identifier 316, queue manager 318, action manager 320, and data repository 322. The interface 312 can include hardware, software, or a combination of hardware and software components to interface with the network 301, devices within the system 300 (e.g., network 301, client devices 302, access point 303, cable modem 304, CMTS 305, server 306, ISP 307, or cloud 308), or components of the network device 310. The interface 312 can include features and functionalities similar to the communication interface 2018 to interface with the aforementioned components, such as in conjunction with FIG. 2A. For example, the interface 312 can include standard telephone lines LAN or WAN links (e.g., 802.11, T1, T3, Gigabit Ethernet, Infiniband), broadband connections (e.g., ISDN, Frame Relay, ATM, Gigabit Ethernet, Ethernet-over-SONET, ADSL, VDSL, BPON, GPON, fiber optical including FiOS), wireless connections, or some combination of any or all of the above. Connections can be established using a variety of communication protocols (e.g., TCP/IP, Ethernet, ARCNET, SONET, SDH, Fiber Distributed Data Interface (FDDI), IEEE 802.11a/b/g/n/ac CDMA, GSM, WiMax and direct asynchronous connections). The interface 312 can include at least a built-in network adapter, network interface card, PCMCIA network card, EXPRESSCARD network card, card bus network adapter, wireless network adapter, USB network adapter, modem, or any other device suitable for interfacing one or more devices within the system 300 to any type of network capable of communication. The interface 312 can communicate with one or more aforementioned components to at least receive, transmit, or otherwise exchange data/information. The interface 312 can interact with other components or devices not limited to those discussed herein.

In various implementations, the interface 312 can wirelessly interface with or provide a wireless connection for the client devices 302. The interface 312 can provide a wired connection to the cable modem 304. For example, the interface 312 can receive packets designated for the client device 302 from the cable modem 304 via the wired connection, and send the received data to the client device 302 via the wireless connection, and vice versa. The interface 312 can store received information in the data repository 322.

The network device 310 can include a rule manager 314. The rule manager 314 can manage one or more rules (e.g., low latency classification rules) for classifying flows or packets as low latency flows or low latency packets. The one or more rules can correspond to or be a part of the information identifying one or more latency service flows being communicated via cable through the CMTS 305 in communication with the network device 310 (e.g., the access point 303) providing wireless connectivity to the local network. The latency service flows can refer to flows of packets communicated via the low latency pipe (e.g., low latency service flow pipe). The one or more rules or the information identifying the one or more latency service flows can be used by the traffic identifier 316 to identify latency-sensitive traffic for low latency management at the local network. The rule manager 314 can store the one or more rules or the information identifying the one or more latency service flows in the data repository 322.

The one or more rules or information identifying the one or more latency service flows (e.g., sometimes referred to as latency service flow information) can include any information associated with individual flows of packets to classify or identify the packets to perform low latency services. For example, the rules can include one or more service flow numbers of the (Ethernet) packets. The service flow number of each Ethernet packet can be a unique identifier assigned to packets within a DOCSIS network indicating the packets associated with or from the low latency pipe. The service flow number can be included as part of the packet header or metadata, which can be used by at least one of the network device 310, the cable modem 304, or the CMTS 305, among other devices to prioritize and manage traffic flows within the network 301.

In another example, the rules can include one or more tuples, such as 4-tuple or 5-tuple, among other number of tuples. The 4-tuple can include the source and destination ports and the source and destination addresses. The 5-tuple can include the source and destination ports, the source and destination addresses, and the protocol (e.g., transmission control protocol (TCP) or user datagram protocol (UDP)) of the packets. Packets within the same flow can include the same 4-tuple or 5-tuple. The 4-tuple or 5-tuple can be indicative of the latency (or the type of application) associated with individual flows of traffic. For instance, the rule manager 314 can receive the tuple of one or more flows of packets as part of the one or more rules (or latency service flow information). The rule manager 314 can provide the one or more rules for other components of the network device 310 to perform the respective operations, such as providing the one or more rules to at least the traffic identifier 316 to identify flows of packets configured for low latency services.

In further examples, the rules can include one or more flags (or fields) of packets. The flag can refer to a specific bit or bits within the header of a packet representing or indicative of control information about the packet. The flag of the packets can indicate or be used to identify a respective flow of packets to take a low latency action for, e.g., as performed by at least one of the queue manager 318 or the action manager 320. In some cases, the flag may indicate the type of application associated with the flows of packets, such as low latency application that communicates latency-sensitive packets or non-low latency application that communicates latency-insensitive packets.

In some cases, the flag can be assigned or generated (e.g., by the server 306, the CMTS 305, or the network device 310) for one or more packets based on the latency-related information associated with the flows of packets. The latency-related information can include telemetry data of the packets, such as but not limited to the bandwidth, average packet length, average inter-arrival time (IAT) of the packets, etc., the variance of the telemetry data, or the standard deviation of each variance (e.g., indicative of the CBR of the flow), among others. In this case, flows with a CBR (e.g., any flow with a standard deviation of less than or equal to a threshold, e.g., 1% standard deviation) can be considered as latency-sensitive flows, and packets associated with the latency-sensitive flows can be assigned with the flag.

In some implementations, the one or more flags or fields can include, correspond to, or be a part of the tuple (or fields of the packets corresponding to the tuple). In some other implementations, the one or more flags or fields can be a part of other fields in the header of the packets. In certain configurations, the one or more flags or fields may be a part of a new field created for the packets to indicate a latency service flow, e.g., flows designated for the low latency service. The one or more flags or fields can be used by at least the traffic identifier 316 to identify traffic of packets designated for the low latency services. In some cases, the flag can include or correspond to the service flow number, among other types of identifiers or indications to indicate the latency service flow, for example.

The rule manager 314 can receive the one or more rules or the latency service flow information from the server 306 (e.g., latency server 1005) monitoring the one or more low latency classification rules at the CMTS 305. The server 306 may sometimes be referred to generally as a device. For example, the CMTS 305 can include the latency application configured to communicate with the server 306. Responsive receiving packets, such as from the ISP 307 or the cloud 308, the CMTS 305 can determine whether the packets are designated for the low latency pipe (for latency-sensitive flows) or the classic pipe in the DOCSIS network. The CMTS 305 can route the packets to the cable modem 304 via at least one of the pipes. The CMTS 305 can assign the packets to the respective pipes based on at least one of the QoS policies configured for the packets, traffic prioritization settings, the type of application generating the traffic, or other factors.

For example, the CMTS 305 can configure or provide the QoS policies to prioritize certain types of traffic, such as real-time applications desiring low latency, over other applications. The CMTS 305 can forward the one or more rules (e.g., 4-tuple, 5-tuple, flag, or service flow number) associated with the prioritized packets according to the QoS policies to the server 306. In another example, the CMTS 305 may classify incoming traffic based on predetermined criteria, such as port numbers, protocol types, or packet header information known to be associated with low latency application or non-low latency application. The CMTS 305 can forward the predetermined criteria (e.g., specific packet information) to the server 306 as part of the one or more rules or latency service flow information.

In further examples, the CMTS 305 can process or analyze the flows of packets to identify the type of application generating the traffic, e.g., low latency application or non-low latency application. The CMTS 305 can route the packets associated with latency-sensitive applications, such as teleconference, online gaming, or video streaming to the low latency service flow pipe to minimize delay and ensure a responsive user experience. The CMTS 305 can forward information associated with the flows of packets identifying the type of application to the server 306, including but not limited to at least one of the 4 or 5-tuple of the packets, service flow number, or flag assigned to the packets indicating designation for the low latency pipe.

With the one or more rules monitored or received by the server 306 at the CMTS 305, the server 306 can forward the rules to the network device 310 (e.g., rule manager 314). The rule manager 314 can store the rules in the data repository 322 for traffic identification at the local network. In some implementations, the server 306 can perform one or more features or functionalities described for the CMTS 305 to route the packets to the respective pipes (e.g., low latency or classic pipes). For example, the server 306 can obtain at least a portion of the packets (of each flow) at or from the CMTS 305. The server 306 can process the packets to identify the type of application communicating the packet or whether the packets is latency-sensitive. In some cases, the packets may include a pre-configured flag assigned for routing the packets to the low latency pipe. For packets latency-sensitive packets or packets designated for the low latency pipe, the server 306 can forward at least one of but not limited to the 4 or 5-tuple of the packets, service flow number associated with the packets, or the pre-configured (or assigned) flag to the network device 310 (e.g., the rule manager 314) as part of the one or more rules or latency service flow information.

In some implementations, the CMTS 305 can be configured with or store the one or more rules including, for instance, predefined or known flags, 4 or 5-tuple, etc. associated with latency-sensitive packets or packets from low latency applications. In such cases, the CMTS 305 can periodically send the one or more rules to the server 306. In some cases, the server 306 may initiate an API call to request or obtain the one or more rules from the CMTS 305, e.g., server 306 can obtain the low latency flow information or tuple information directly from the CMTS 305. The server 306 can route the one or more rules to the network device 310 for management by the rule manager 314.

In various configurations, monitoring and obtaining the one or more rules at the CMTS 305 can involve the server 306 communicatively coupled to the CMTS 305, such that an API call can be initiated for the server 306 to receive information from the CMTS 305. In certain configurations, monitoring and obtaining the one or more rules from the CMTS 305 may involve having an intermediary device (e.g., another server or other networking devices) between the server 306 and the CMTS 305, where the intermediary device can be installed with a latency application to relay information from the CMTS 305 to the server 306.

In some cases, the rule manager 314 may receive the one or more rules or the latency service flow information from the cable modem 304. For example, for packets from the CMTS 305, the cable modem 304 can determine whether the packets are received from the low latency pipe or the classic pipe. The cable modem 304 can relay low latency information (e.g., flag or service flow number) or the tuple associated with the latency-sensitive flow to the server 306 via the latency application (executing on the cable modem 304). In some cases, the server 306 may initiate an API call to request the low latency information or the tuple of the packets from the low latency pipe. The low latency information or the tuple can be a part of the one or more rules, which can be forwarded from the server 306 to the network device 310 (or the access point 303). It should be noted that various operations or features for monitoring the one or more rules (e.g., low latency classification rules) at the CMTS 305 can be performed similarly at the cable modem 304, for example.

The rule manager 314 may receive the one or more rules or the latency service flow information from other devices, not limited to the server 306. For instance, the rule manager 314 may receive the one or more rules from an intermediary device between the network device 310 and the server 306. The rule manager 314 may receive the one or more rules via the latency application installed on the network device 310 for communicating with the server 306 (or other servers), such that the one or more rules can be used to provide low latency services at the local network.

In some implementations, the one or more rules may indicate one or more actions to perform for the respective low latency packets. The one or more rules can include actions such as but not limited to assigning latency-sensitive packets to a high-priority queue, bypassing one or more mesh nodes for latency-sensitive packets, or disabling aggregation at the network device 310 (or the access point 303). For instance, the rule manager 314 (or the server 306 or the CMTS 305) can assign one or more specific actions to certain tuples, flags, or service flow numbers.

In some implementations, the one or more rules can indicate the one or more actions to be performed based on the support or compatibility of one or more devices within the local network. For example, if the local network includes mesh nodes, the one or more rules can provide operations to bypass one or more mesh nodes. In another example, if the access point 303 (or the network device 310) supports aggregation of packets, the one or more rules can provide the operations to dynamically allow/enable or disable aggregation at the access point 303. In yet another example, for the access point 303 supporting multiple queues, e.g., regular queue and high-priority queue, the one or more rules can provide the operations to schedule low latency packets with high-priority queue (or put the latency-sensitive packets in the high-priority queue).

According to the one or more rules, the one or more components of the network device 310 can perform their respective features or functionalities to prove low latency services in the local network. In some aspects, the rule manager 314 can include or perform features or functionalities of at least one of the CMTS 305 or the server 306, such as to generate the one or more rules or latency service flow information, monitor or obtain latency service flow information, or classify certain packets as latency-sensitive to perform low latency management. For purposes of providing examples herein, the rule manager 314 can correspond to or be a part of the access point 303 to receive the one or more rules or the latency service flow information from the server 306 monitoring the packets at or from the CMTS 305. Further, for purposes of providing examples, the one or more rules or latency service flow information can correspond to latency-sensitive packet information (or identification). Although, it should be noted that the one or more rules or latency service flow information can include latency-sensitive packet information and latency-insensitive packet information for classification, identification, or mapping by at least the traffic identifier 316, for example.

The network device 310 can include a traffic identifier 316. The traffic identifier 316 can identify packets corresponding or mapped to one or more latency service flows for wireless communication to the devices (e.g., client devices 302) on the local network. The traffic identifier 316 can identify the packets corresponding to the one or more low latency classification rules or using the latency service flow information. For example, the traffic identifier 316 (e.g., performing operations of the access point 303) can receive packets from the cable modem 304. The traffic identifier 316 can process or analyze one or more packets of each respective flow to obtain at least one of the 4 or 5-tuple of the packets, a packet field configured for applying a flag, a service flow number of the packets, or other information.

The traffic identifier 316 can perform a lookup in the data repository 322 for comparing, matching, or corresponding the information of the packets to the one or more latency classification rules or latency service flow information. For example, the traffic identifier 316 can compare the tuple of the received packets to the tuple associated with the low latency classification rules. In some implementations, a 4-tuple of destination and source IP addresses and destination and source ports may be used. In some implementations, a 5-tuple of destination and source IP addresses and destination and source ports with identification of protocol may be used. In other examples, the traffic identifier 316 may compare the service flow number or at least one field (e.g., bits of the at least one field may be indicative of a flag) of the received packets to the service flow numbers or the flags associated with the low latency classification rules.

The traffic identifier 316 can determine whether individual flows of packets correspond to (or include information corresponding to) at least one of the low latency classification rules according to the comparison or mapping. In other words, the traffic identifier 316 can identify whether the packets correspond to one or more latency service flows according to or using the latency service flow information. The examples herein can use flags or tuple information for identifying low latency traffic from the CMTS 305 or the cable modem 304, although other types of information can be used for indicating low latency traffic, not limited to those discussed herein. In such cases, packets corresponding to the one or more classification rules can include packets with a tuple (e.g., 4-tuple or 5-tuple) or a flag corresponding to the tuple or the flag listed in the one or more classification rules or latency service flow information.

Responsive to determining whether the traffic (e.g., flows of packets) corresponds to the one or more low latency classification rules, the traffic identifier 316 can provide an indication of latency-sensitive packets (or latency service flows) to at least one of the queue manager 318 or the action manager 320 to perform at least one action for latency service flows. In some configurations, the traffic identifier 316 may provide an indication of latency-insensitive packets (or non-latency service flows) to at least one of the queue manager 318 or the action manager 320 to perform at least one action for other flows (e.g., non-latency service flows).

The network device 310 can include a queue manager 318. The queue manager 318 can be configured to communicate, map, or otherwise manage one or more queues used for transmission of or wirelessly communicate the packets to the one or more devices (e.g., client devices 302) in the local network. The queue manager 318 can communicate the packets in at least one of multiple queues for the local network devices, such as low latency queue (or high-priority queue) and regular queue. The high-priority queue can be designated for or provided to support the transmission of latency-sensitive packets or latency service flows. The regular queue can be designated to support the transmission of other types of packets, such as latency-insensitive packets. The one or more queues may include other types of queues not limited to high-priority queues and regular queues. In some cases, the queue manager 318 can manage more than two queues. In this case, the high-priority queue can correspond to the queue having higher priority than the other queues.

The queues can be a data structure storing packets in a particular order, e.g., according to the arrival time or arrangement of packets in the flow. The queue manager 318 may use at least one suitable queuing technique to queue the packets. Upon receiving individual packets, the queue manager 318 can communicate or map the packets to the one or more queues based on at least the one or more low latency classification rules. For example, the queue manager 318 can map the packets corresponding to the one or more low latency classification rules (e.g., determined by the traffic identifier 316) to the high-priority queue. The queue manager 318 can map other packets outside of the one or more low latency classification rules to the regular queue, e.g., packets absent of any tuple (e.g., 4-tuple or 5-tuple) or flag listed in the one or more low latency classification rules.

The high-priority queue can be prioritized over the regular queue. For example, the queue manager 318 can assign a higher scheduling priority to packets in the high-priority queue, ensuring the packets in the high-priority queues are processed and transmitted ahead of packets in the regular queue. Prioritizing the packets of the high-priority queues can facilitate and ensure that critical or time-sensitive data, such as real-time voice or video streams, receive preferential treatment to minimize latency and maintain QoS. The queue manager 318 may implement various queuing disciplines, such as but not limited to First-In-First-Out (FIFO) or Weighted Fair Queuing (WFQ), among others, within each queue to improve or optimize packet handling and resource utilization. In some cases, the queue manager 318 can perform queue overflow handling, such as prioritizing certain packets (e.g., packets in the high-priority queue) over packets in the regular queue, increasing the queue size for the high-priority queue, etc. The queue manager 318 can perform other suitable queue management techniques to prevent congestion and ensure the QoS for the latency-sensitive packets.

The network device 310 can include an action manager 320. The action manager 320 can manage or perform one or more actions to provide low latency services for the latency service flows. The one or more actions can include disabling aggregation for one or more wireless connections, bypassing one or more mesh nodes, or other actions not limited to those discussed herein. In some cases, queue management for latency service flows can be a part of the one or more actions. The one or more actions can be predefined and stored in the data repository 322. The action manager 320 can perform the one or more actions based on support or compatibility of the device(s) in the local network.

For example, the network device 310 (e.g., access point 303) can include aggregation capability or support aggregation of packets, e.g., sometimes referred to as WiFi aggregation at the local network. The aggregation can refer to a process for combining (or aggregating) multiple data packets, such as into at least one relatively larger packet, for transmission via a link for using the link efficiently. In certain technologies, aggregation can refer to or involve combining data from multiple links or channels. The WiFi aggregation is a technique that allows multiple data frames or packets to be combined into a single, relatively larger frame prior to or before the transmission over the wireless network of the local device. For packets in the regular queue, the action manager 320 may perform WiFi aggregation to reduce overhead associated with the relatively smaller individual frames by grouping the multiple frames. However, for latency-sensitive packets, performing the aggregation may add latency to the transmission of the packets.

In such cases, the action manager 320 can disable the aggregation for latency-sensitive packets, including the packets scheduled or mapped to the high-priority queue. The enabling or disabling of aggregation in WiFi for the network device 310 (e.g., access point 303 or STA device) can be performed dynamically by the latency application installed on the network device 310 (not limited to during the wireless connection setup), for example. In such cases, the action manager 320 can disable aggregation in the WiFi in response to receiving latency-sensitive packets and enable aggregation in response to receiving latency-insensitive packets.

In another example, the local network may include or be installed with one or more mesh nodes. The mesh node can include or refer to devices within a mesh network that function as both endpoints and relays for data transmission. In a mesh network, each node can communicate directly with neighboring nodes, creating a distributed network infrastructure. The mesh nodes can operate to dynamically route data through the (local) network, allowing for, for instance, relatively high bandwidth or improved connectivity over large areas.

In a certain mesh network, the network device 310 (e.g., access point 303) may connect to the client device 302, or vice versa, through one or more mesh nodes with the strongest or highest throughput path. For instance, a mesh network can include two mesh nodes between the network device 310 and the client device 302. In the certain mesh network, traffic may be routed through both the mesh nodes in various scenarios. However, each mesh node may increase the latency of packet transmission by a certain value (e.g., 10 msec or more), and the mesh network may not consider the fastest path from the network device 310 to the client device 302, in some scenarios. In such cases, for the mesh network, the action manager 320 can bypass the one or more mesh nodes of the local network to communicate the packets directly to the one or more client devices 302, or vice versa, responsive to the packets corresponding to the one or more low latency classification rules (e.g., determined by the traffic identifier 316).

For example, for latency-insensitive packets, or packets mapped to the regular queues, the action manager 320 can route the packets to at least one mesh node having the strongest or highest throughput path or mesh node with the least traffic, according to at least one suitable load balancing technique or traffic routing mechanism. For latency-sensitive packets or packets mapped to the high-priority queue, the action manager 320 can identify the fastest (or lowest latency) path between the network device 310 and the client device 302. To identify the fastest path, the action manager 320 may track or record throughput and latency for each respective path in the local network from the network device 310 to the client device 302 (or other client devices 302). In some cases, the action manager 320 may receive the throughput and latency information for each path to the client device 302. In some implementations, the action manager 320 (or the latency application executing on the network device 310) can request the bandwidth of each path or to each respective device within the local network. According to the throughput and latency information and the bandwidth information, the action manager 320 can set up a path for the transmission of latency-sensitive packets supporting the lowest latency and satisfying the bandwidth for data transmission. The action manager 320 can transmit latency-sensitive packets or packets in the high-priority queue via the established path while transmitting other packets in other paths.

In some implementations, the action manager 320 can cause the packets corresponding to the one or more low latency classification rules to be communicated to the client device 302 in the local network via one or more low latency pipelines. For example, in the context of DOCSIS network and similar to the dual pipe architecture between the CMTS 305 and the cable modem 304, the dual pipe architecture can be established between the network device 310 and at least the client device 302 (or one or more other devices in the local network). For packets scheduled in the high-priority queue, the action manager 320 can route the packets to the client device 302 via the one or more low latency pipelines. For other packets schedule in the regular queue(s), the action manager 320 can route the packets to the client device 302 via one or more classic pipelines. Similarly, for latency-sensitive packets for transmission by the client device 302, the client device 302 can transmit the latency-sensitive packets to the network device 310 (e.g., access point 303) via the one or more low latency pipelines.

In some configurations, the one or more low latency pipelines can be configured to at least one of bypass one or more mesh nodes or disable aggregation of data being communicated via the one or more low latency pipelines. For example, by assigning the packets for transmission or transmitting the packets via the one or more low latency pipelines, the packets can bypass the one or more mesh nodes in the mesh network. In another example, aggregation mechanism may be disabled for packets transmitted via the one or more low latency pipelines. Accordingly, the action manager 320 can transmit the latency-sensitive packets (or packets corresponding to the one or more latency service flows) via the one or more low latency pipelines to at least one of bypass the one or more mesh nodes or disable aggregation of data communicated via the one or more low latency pipelines. It should be noted that other actions or instructions can be performed for managing latency-sensitive flows or packets at the local network, and other information may be used for the identification of low latency traffic from low latency application, not limited to those discussed herein.

In some implementations, the network device 310 can perform other features and functionalities using the components described above to at least obtain the one or more rules or latency service flow information, identify low latency traffic, or execute low latency service at the local network. The network device 310 may include additional components configured to perform the features or functionalities discussed herein. In some cases, the one or more components (e.g., interface 312, rule manager 314, traffic identifier 316, queue manager 318, or action manager 320) of the network device 310 may be combined or a part of a single component, for example. In some other cases, each of the components of the network device 310 may include multiple devices, circuits, or components configured to perform individual features to map high-priority packets to low latency data pipe, among others.

The network device 310 can include a data repository 322. The data repository 322 can include at least a traffic data storage 324, rule storage 326, queue storage 328, and action storage 330. The data repository 322 can include data stored in at least one remote storage device (e.g., data stored on the server 306 or cloud 308). In some cases, the network device 310 can relocate or transfer data between the data repository 322 and the remote storage device. In this case, the network device 310 can access data from the remote storage device. The data repository 322 can be referred to as the memory of the network device 310, for example. The data repository 322 can be accessed by one or more components within the network device 310 (e.g., interface 312, rule manager 314, traffic identifier 316, queue manager 318, or action manager 320). The data repository 322 can be accessed by other devices within the network 301, such as at least one of the client device 302, access point 303, cable modem 304, CMTS 305, server 306, ISP 307, or cloud 308.

The traffic data storage 324 can include, store, or maintain data packets or information associated with the flows communicated by at least the cable modem 304. In some cases, the traffic data storage 324 can receive data packets from the CMTS 305. For example, the traffic data storage 324 can store data packets of various flows, including other information associated with the data packets, such as 4 or 5-tuples (or other header fields), service flow number associated with individual packets, etc. The data packets from the traffic data storage 324 can be communicated or mapped to the one or more queues for wireless communication to the one or more devices in the local network. In some cases, the traffic data storage 324 may store information for the server 306, such as at least a portion of the packets from the CMTS 305 for analysis or processing to determine the type of traffic (e.g., low latency or non-low latency traffic). The traffic data storage 324 can store other data utilized or stored by the rule manager 314 or traffic identifier 316 or received by the interface 312, for example.

The rule storage 326 can include, store, or maintain the one or more low latency classification rules. The one or more low latency classification rules can include, correspond to, or be a part of the information identifying latency service flows (e.g., latency service flow information), e.g., the rule storage 326 can store the latency service flow information. The rule storage 326 can be accessed by at least the rule manager 314 or the traffic identifier 316. For instance, the rule storage 326 can receive the one or more rules from the rule manager 314 (e.g., received from the CMTS 305 or other servers via the latency application) for storage. In another example, the rule storage 326 can provide the one or more rules for the traffic identifier 316 to identify traffic or packets corresponding to the one or more rules or packets associated with at least one of the latency service flows. In some cases, the rule storage 326 can be accessed by the server 306 to update the one or more rules or latency service flow information.

The queue storage 328 can include, store, or maintain the one or more queues for low latency management. The one or more queues can include at least one high-priority queue or low latency queue and one or more other queues for non-low latency traffic. In some cases, the queue storage 328 may store packets mapped, scheduled, or communicated to the one or more queues. In some other cases, the queue storage 328 can store a link or mapping of the one or more packets to the one or more queues. The queue storage 328 can be accessed by at least the queue manager 318 or the action manager 320. For instance, the queue storage 328 can be accessed by the queue manager 318 to map the packets corresponding to the one or more rules to the high-priority queue (or a queue having higher priority than other queues). In another example, the queue storage 328 can be accessed by the action manager 320 to perform low latency services, such as bypassing the mesh node(s), disabling aggregation, etc., for one or more flows of packets according to the type of queue (e.g., high-priority or regular queue) assigned, scheduled, or mapped for the packets.

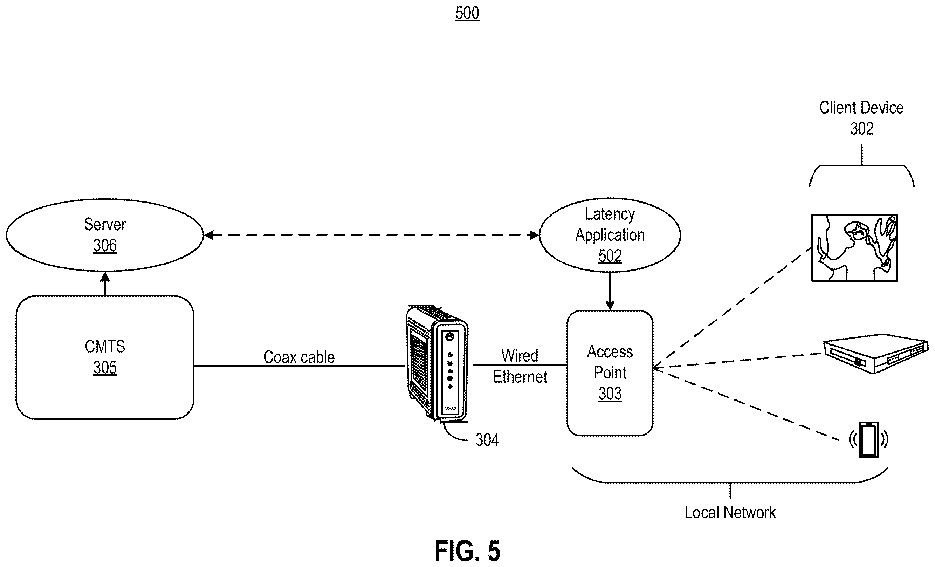

The action storage 330 can include, store, or maintain the one or more actions executable by at least the action manager 320 or other authorized remote devices. The action storage 330 can store other actions not limited to those discussed herein. The action storage 330 can be accessed by at least the action manager 320. In some cases, various techniques for queue management can be a part of the action, and the queue manger 318 may access the action storage 330. For example, the action can include but is not limited to at least one of communicating or mapping latency service flows to the high-priority queue, bypassing one or more mesh nodes for the latency service flows, dynamically disabling aggregation, communicating the latency service flows to the client device 302 in the local network via the one or more low latency pipe established between the network device 310 (e.g., access point 303) and the client device 302, etc. The action storage 330 may receive updated actions, a new action, or an indication to remove at least one existing action. The actions may be configured or updated by the administrator of the network device 310 or the server 306, among others. In some cases, the action storage 330 can include one or more actions configured to be performed by the remote device(s), such as actions for at least one of the cable modem 304, the CMTS 305, the server 306, etc. The components of the system 300 can be deployed in different deployment scenarios, e.g., described in conjunction with but not limited to at least one of FIGS. 4 or 5.

FIG. 4 illustrates an example diagram of a low latency system architecture 400, in according with one or more implementations. The low latency system architecture 400 can be described for instance in the context of the DOCSIS network including dual pipe architecture. The low latency system architecture 400 can include one or more components of the communication system 100, the computer 2001, the system 300, or other components or devices as described in conjunction with but not limited to FIGS. 1A-3. As shown, the low latency system architecture 400 can include at least the cable modem 304 in communication with the CMTS 305 via the dual pipe architecture. The dual pipe can include or refer to at least the low latency (LL) service flow (SF) pipe 404A, 404B (e.g., sometimes referred to as LL SF pipe(s) 404) and the classic SF pipe 406A, 406B (e.g., sometimes referred to as classic SF pipe(s) 406). The LL SF pipe 404A and the classic SF pipe 406A can be pipelines for upstream (US) data transmission from the cable modem 304 to the CMTS 305. The LL SF pipe 404B and the classic SF pipe 406B can be pipelines or communication channels for downstream (DS) data transmission from the CMTS 305 to the cable modem 304.

Each of the LL SF pipes 404 can be configured to handle traffic for low latency applications for transmission of latency-sensitive packets, such as real-time communication, video streaming, virtual simulations, or online gaming. Each of the LL SF pipes 404 can employ prioritization mechanisms to ensure that packets from the low latency applications are processed and transmitted with minimal latency. The QoS parameters for each of the LL SF pipes 404 can be configured to prioritize the low latency traffic, thereby allowing the latency-sensitive packets to at least one of bypass queues, be put in front of the queues, or receive expedited processing, for example.

Each of the classic SF pipes 406 can be configured to handle traffic from other applications that are less sensitive to latency (e.g., non-low latency applications), such as web browsing, email, or file downloads. For example, each of the classic SF pipes 406 may employ standard queuing mechanisms to manage the transmission of packets. The QoS parameters associated with each of the classic SF pipes 406 may be configured to provide similar prioritization (or treatment or management) to different types of traffic, e.g., latency-insensitive packets. In some cases, each of the classic SF pipes 406 may prioritize throughput and overall network capacity over minimizing latency.

As shown in FIG. 4, the low latency system architecture 400 can include at least one non-queue building (NQB) sender 402A, 402C and at least one queue building (QB) sender 402B, 402D. The NQB sender 402A, 402C can refer to an entity or a device that does not contribute to the buildup of queues or the accumulation of data packets in the queues within the networking device, such as the cable modem 304 or the CMTS 305 in this example. For instance, the NQB sender 402A, 402C may be associated with applications that transmit packets in relatively small bursts, thereby minimizing the likelihood of queue congestion. The QB sender 402B, 402D can refer to or represent an entity or a device that contributes to the buildup of queues in or accumulation of data packets in the queues within the networking device, such as the cable modem 304 or the CMTS 305 in this example. For instance, the QB sender 402B, 402D may be associated with applications that generate continuous or relatively high-volume traffic, thereby potentially resulting in queue congestion at the respective networking device sending the data packets.

Each of the senders (e.g., NQB sender 402A, 402C and QB sender 402B, 402D) can transmit data packets to the classifier of the respective networking device. For purposes of providing examples, the transmission of data packets can be described from the perspective of the CMTS 305 transmitting downstream packets to the cable modem 304, although it should be noted that similar operations or functionalities can be described for the cable modem 304 transmitting upstream packets to the CMTS 305.

The classifier can receive data packets from the respective senders communicatively coupled to the CMTS 305. The classifier may receive the packets from the senders in at least one queue. The classifier can be configured to identify and classify or categorize incoming packets as latency-sensitive packets or latency-insensitive packets. In this case, the classifier can classify the packets from the senders to the LL SF pipe 404 for latency-sensitive flow (or latency service flow) and to the classic SF pipe 406 for other flows of packets. The classifier can perform the classification based on the latency criteria for individual flows of packets, according to the CBR of individual flows, the tuple (e.g., 4 tuple or 5 tuple) of the packets of individual flows, at least one flag associated with one or more packets, or other one or more low latency classification rules.

In some implementations, the classifier can provide an explicit congestion notification (ECN) to the one or more senders to notify senders of potential congestion, for instance, to allow the senders to adjust transmission rates or perform other traffic management mechanisms. In some implementations, the classifier can be configured to mark packets with specific differentiated services code points (DSCPs) to indicate the priority or actions (or treatment) for the packets. The DSCP can be a field in the IP header of each packet specifying the priority and the type of service for the packet, which may be used for QoS differentiation between packets. The classifier may assign a service flow number for packets of a respective flow to establish communication channels between the cable modem 304 and the CMTS 305 in the network 301. Each service flow can be identified by the service flow number, which assists in managing and directing traffic within the network 301. At least one of the service flow number or the DSCP can be a part of the one or more low latency classification rules for identifying traffic or data packets for low latency applications.

As discussed herein, the one or more low latency classification rules can be provided by the CMTS 305 to the server 306 via the latency application executing on the CMTS 305. In some cases, the one or more low latency classification rules can be provided by the cable modem 304 to the server 306 via the latency application executing on the cable modem 304. In some implementations, the server 306 can identify or determine the low latency classification rules from the CMTS 305 and may provide these rules to a latency application, network device 310, access point 303, etc.

In some arrangements, the classifier may send latency-sensitive packets or latency service flows to the LL SF pipe 404 with queue protection (QP). The QP can refer to at least one mechanism or technique to prevent or mitigate the excessive buildup of the queues, for instance, in the LL SF pipe 404. In some configurations, the excessive buildup of the low latency queues may cause the QP to transfer at least a portion of the packets from one queue to another or certain packets from the LL SF pipe 404 to the classic SF pipe 406.

The CMTS 305 (or the cable modem 304) can perform active queue management (AQM) for each respective pipe, e.g., AQM for the LL SF pipe 404 (LL-AQM) and AQM for the classic pipe 406 (C-AQM). The AQM can refer to a technique used to manage queue lengths and prevent congestion in the networking device by monitoring queue occupancy and dynamically adjusting packet drop or marking policies to maintain a desired throughput and latency.

The low latency system architecture 400 can include an aggregate service flow (ASF). The ASF can represent a collection of multiple related service flows, for instance, flows sharing QoS characteristics or parameters. The ASF can be used to manage and allocate bandwidth resources within the network 301, such as for data exchanges between networking devices, e.g., between the cable modem 304 and the CMTS 305, in this case. For instance, the ASF can allow multiple service flows with similar characteristics to be treated as a single entity within the network 301, thereby simplifying configurations and resource allocation.

The DS scheduler can refer to a component for controlling the transmission of packets, for instance, from the CMTS 305 to the cable modem 304. The DS scheduler can prioritize packets according to the assigned queues, latency requirements, or other QoS parameters associated with the packets. The transmission of the data packets downstream via the LL SF pipe 404B and the classic SF pipe 406B can be handled by the DS scheduler. The US scheduler can perform features or functionalities similar to the DS scheduler. In this case, the US scheduler can manage the transmission of packets upstream, for instance, from the cable modem 304 to the CMTS 305. The transmission of the data packets upstream via the LL SF pipe 404A and the classic SF pipe 406A can be handled by the US scheduler.

The data packets from the respective pipes can be outputted to the destination, e.g., from the cable modem 304 upstream to the CMTS 305 or from the CMTS 305 downstream to the cable modem 304. For example, the CMTS 305 can receive the output 408A from the cable modem 304, including data packets from the LL SF pipe 404A and the classic SF pipe 406A. The cable modem 304 can receive the output 408B from the CMTS 305, including data packets from the LL SF pipe 404B and the classic SF pipe 406B. The data packets of the output s 408A, 408B may be delivered based on the latency requirements, priority levels, or other QoS considerations. For instance, data packets from the LL SF pipe 404A, 404B can be prioritized or delivered prior to data packets from the classic SF pipe 406A, 406B. For instance, the AQMs of the pipes may be communicatively coupled to each other to manage queues or priorities for sending the data packets to the destination device, such that the packets from the LL SF pipe 404A, 404B can be provided before the packets from the SF pipe 406A, 406B.

In various implementations discussed herein, the CMTS 305 can be in communication with the server 306, e.g., via the latency application executing on the CMTS 305. As discussed herein, the CMTS 305 can provide information identifying the latency service flow (e.g., one or more low latency classification rules) to the server 306. Although the server 306 is shown and described as coupled to the CMTS 305 for monitoring data packets and receiving one or more rules or information, the server 306 may similarly perform packet monitoring and obtain one or more rules or information at or from the cable modem 304, for example. The different deployment scenarios for communication between at least the CMTS 305, the cable modem 304, and/or the server 306 can be described in conjunction with at least FIG. 5.

FIG. 5 illustrates a block diagram of an example interconnection 500 between devices within a network providing low latency services, in according with one or more implementations. The interconnection 500 can include or correspond to the interconnection between various components of the communication system 100, the computer 2001, the system 300, the low latency system architecture 400, or other components or devices as described in conjunction with but not limited to FIGS. 1A-4. For example, FIG. 5 shows the interconnection 500 between the CMTS 305, the server 306, the cable modem 304, the access point 303 including or executing a latency application 502, and the client devices 302. It should be noted that other devices or components can be included as part of the interconnection 500 or intercommunication between various devices, not limited to those shown in FIG. 5. Further, it should be noted that the interconnection 500 is a non-limiting exemplary scenario illustrating example communications between networking devices, and other exemplary scenarios or arrangements of devices can be applied similarly herein for different interconnections or communications between the networking devices, among other devices within the network 301.

As shown in FIG. 5, the CMTS 305 can be connected to cable modem 304 via a wired connection (e.g., coax cable). The CMTS 305 can relay data packets from at least the ISP 307 or the cloud 308 downstream to at least the cable modem 304. The CMTS 305 can relay data packets from the cable modem 304 upstream to the ISP 307 or the cloud 308. The cable modem 304 can exchange data packets (e.g., Ethernet packets) with the access point 303 via a wired connection (e.g., wired Ethernet connection). The access point 303 can communicate with one or more client devices 302 via respective wireless connections. The access point 303 and the client devices 302 can be parts of the local network. The local network may include other devices, not limited to the access point 303 and the client devices 302.

The interconnection 500 can include the network device 310. The network device 310 can correspond to at least one of the components or devices as described in conjunction with at least FIG. 5, such as at least one of the CMTS 305, the server 306, or the access point 303. For purposes of providing examples, the network device 310 can be described in conjunction with or corresponding to the access point 303. In such cases, the network device 310 can be in the local network managing data transmission from Ethernet packets to WiFi packets to the client devices 302 within the local network, for example.

In the example scenario shown in FIG. 5, the server 306 (e.g., latency server 1005) can communicate with the CMTS 305 via the latency application installed or included in the CMTS 305. The CMTS 305 can forward or relay latency service flow information or one or more rules (e.g., low latency classification rules) to the server 306 via the latency application. In some cases, the CMTS 305 can relay at least a portion of the incoming packets of individual flows to the server 306, such that the server 306 can determine or generate the one or more rules or information for identifying latency service flows (e.g., flows of packets from the low latency pipe, latency-sensitive flows, or traffic from low latency applications).

The server 306 can receive the one or more rules from the CMTS 305. Responsive to receiving the one or more rules, the server 306 can communicate or provide the one or more rules to the access point 303 via the latency application 502 installed on or included in the access point 303. The latency application 502 can be an agent on the side of the access point 303. In some cases, the server 306 may send an update including one or more updated rules (or an updated listing of the one or more rules) to the access point 303). The latency application 502 can include features or functionalities of or correspond to at least one of the latency applications 1056A, 1056B, 1058A, 1058B, 1020A, 1022A, etc., as described in conjunction with at least one of but not limited to FIGS. 1A-F. The latency application 502 can be executed or used by the access point 303 (e.g., the network device 310) to communicate with the server 306 to receive the one or more rules or the information for identifying the latency service flows.

Subsequent to receiving the one or more rules, the access point 303 (e.g., network device 310) can identify traffic from the cable modem 304 corresponding to the one or more rules or identify latency service flows using the latency service flow information. The access point 303 can perform low latency management or services for data packets corresponding to the one or more rules to ensure low latency delivery of packets to the client devices 302 in the local network. The low latency services performed by the access point 303 for the client devices 302 in the local network can include but are not limited to at least one of queue management (e.g., communicating or mapping latency-sensitive packets to high-priority queue), disabling aggregation, bypassing one or more mesh nodes, communicate latency service flows via one or more low latency pipelines established between the access point 303 and at least one client device 302 (e.g., similar to the pipeline between the cable modem 304 and the CMTS 305), etc.

In some implementations, the server 306 can monitor the one or more rules at the CMTS 305 via an API call to the CMTS 305. In this case, the server 306 may be communicatively coupled directly with the CMTS 305. For example, the server 306 may execute an API call to retrieve the one or more rules from the CMTS 305 stored in a data structure at the CMTS 305. The one or more rules can be generated or determined from the classifier of the CMTS 305 classifying the incoming packets for routing via the LL SF pipe 404 or the classic SF pipe 406, as described in conjunction with at least FIG. 4. The one or more rules may include at least one of but not limited to one or more flags or fields, tuple (e.g. 4-tuple or 5-tuple), service flow number, DSCP, etc., associated with the data packets transmitted via the low latency pipe or latency-sensitive flows of packets. In some cases, the server 306 can interface with the CMTS 305 through the API, to obtain at least a portion of the incoming packets to determine, generate, or identify one or more rules or information for identifying latency service flows.

In some arrangements, the CMTS 305 can be in communication with an intermediary server via latency applications of the CMTS 305 and the intermediary server. Responsive to receiving information from the CMTS 305, the latency application of the intermediary server can communicate the information to the server 306. There may be other intermediary servers between at least one pair of devices described in conjunction with FIG. 5, such as between the server 306 and the access point 303 communicatively coupled via the latency application 502.

In some configurations, the CMTS 305 can include an agent (or the latency application) monitoring at least a portion of the incoming packets. Certain incoming packets of one or more flows may include or be configured with a flag for latency service flow or an indication of latency-sensitive packets. Responsive to receiving the flag or the indication, the agent of the CMTS 305 can report at least one of the flag, the tuple (e.g., 4-tuple or 5-tuple), or other information associated with the latency service flow to the server 306 as part of the one or more rules. It should be noted that other types of information can be used for identifying the latency service flows, not limited to those discussed herein.

In some aspects, the access point 303 can relay information to the server 306 via the latency application 502. For example, the access point 303 may receive or collect local network status or statistics, including at least one of latency information, network traffic pattern, bandwidth utilization, packet loss rates, latency measurements, device connectivity status, etc. The access point 303 can report the local network information to the server 306 via the latency application 502. The server 306 may use the local network information to facilitate network management and optimization, for example. In some cases, the server 306 may monitor and manage network operations for the local network using the reported local network information to ensure QoS, network performance, reliability, or security, among other services.

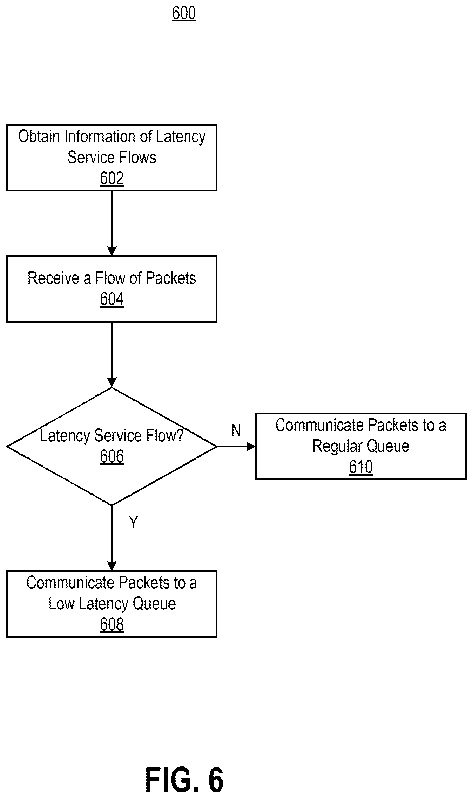

FIG. 6 illustrates an example flow diagram of a method 600 for mapping high-priority WiFi (e.g., wireless) packets to low latency data pipe. The example method 600 can be executed, performed, or otherwise carried out by one or more components of the system 300 (e.g., network 301, client device 302, access point 303, cable modem 304, CMTS 305, server 306, ISP 307, cloud 308, or network device 310), one or more components of the communication system 100, the computer 2001, one or more components of the computing environment 2060, one or more components of the low latency system architecture 400, one or more components of the interconnection 500, or any other computing devices described herein in conjunction with FIGS. 1A-5. The method 600 can include obtaining information of latency service flows, at ACT 602. At ACT 604, the method 600 can include receiving at least one flow of packets. At ACT 606, the method 600 can include determining whether the flow of packets is a latency service flow. At ACT 608, the method 600 can include communicating packets to a low latency queue. At ACT 610, the method 600 can include communicating packets to a regular queue.

Still referring to FIG. 6 in further detail, at ACT 602, the network device (e.g., network device 310) can receive, obtain, or acquire information identifying one or more latency service flows. The information identifying the one or more latency service flows can include or correspond to one or more low latency classification rules. The network device can include or correspond to one of a modem (e.g., cable modem 304), a router, or an access point (e.g., access point 303). In some cases, the modem and the router or the access point can be a part of a single device configured to receive packets via wired connectivity and transmit data via wireless connectivity, for example. The network device (or the access point) can be in communication with at least the CMTS and configured to provide wireless access or connectivity to one or more devices (e.g., client devices 302) in a local network.

The one or more low latency classification rules can be monitored by a device (e.g., latency server 1005 or server 306) at the CMTS (e.g., CMTS 305). The device can be referred to as a latency server for purposes of providing examples herein. The latency server can be in communication with various other devices via respective latency applications on the various devices. The network device can receive the one or more low latency classification rules from the latency server monitoring the one or more low latency classification rules at the CMTS. The one or more low latency classification rules can include at least one of a flag, tuple (e.g., 4-tuple or 5-tuple), service flow number, etc., indicating that the flows or packets are latency-sensitive flows or packets.

In some cases, the latency server may generate the one or more low latency classification rules by monitoring at least a portion of the packets at the CMTS or receiving at least the portion of the packets from the CMTS and determining whether the packets are latency-sensitive. For latency-sensitive packets or packets from or for the low latency pipe, the latency server can identify and record the tuple (e.g., 4-tuple or 5-tuple) or the flag, among other information, as the packets to perform low latency management at the local network, for example.

In some implementations, the network device can receive the information from at least one latency server monitoring the low latency service flows from the CMTS. In this case, the latency server can receive flows of packets for identifying latency service flows from the CMTS. In some implementations, the network device can receive the information from at least one latency server monitoring the low latency service flows at the CMTS. In this case, the latency server may be in communication with the CMTS via API call(s), such that the latency server can retrieve or obtain information regarding low latency service flows (e.g., the one or more low latency classification rules) stored in the data structure or storage of the CMTS.

At ACT 604, the network device can receive at least one flow of packets from the CMTS or the cable modem. The received packets may correspond to the one or more classification rules or may be associated with latency service flows. With the one or more classification rules or latency service flow information, the network device can identify low latency traffic from the CMTS (or the cable modem) based on at least one of one or more flags or fields, tuple information, or other information in the one or more (incoming) packets for low latency service management. The CMTS may receive one or more low latency service flows or packets for low latency applications via cable.

At ACT 606, the network device can determine whether the flow of packets is a latency service flow. For example, the network device can compare the information of the received packets to the one or more low latency classification rules or latency service flow information. Based on a match, e.g., between the flags or tuples listed in the low latency classification rules and the received packet information, the network device can determine or identify that the packets correspond to the one or more latency service flows for wireless communication to one or more devices on the local network. The match between the received packet information and the one or more flags (or fields) or at least one tuple information of the one or more low latency classification rules can indicate that the one or more packets are from the low latency pipe of the CMTS or latency sensitive. For latency-sensitive flows or packets, the network device can proceed to ACT 608 to provide low latency services. Otherwise, for other types of flows of packets, the network device can proceed to ACT 610.

At ACT 608, the network device can communicate or map the one or more packets corresponding to the one or more low latency classification rules (e.g., latency service flows) to a low latency queue or high-priority queue. The high-priority queue can refer to a queue having a higher priority than other queues scheduled for transmission to the one or more devices in the local network, for example. The high-priority queue can be used for the transmission of low latency traffic or latency-sensitive packets to the one or more local network devices. In some cases, the high-priority queue can correspond to at least one of the low latency pipelines for wirelessly communicating the packets to the one or more local network devices. By using the queue having higher priority than one or more other queues, the network device can prioritize the one or more packets corresponding to the one or more low latency classification rules over other packets.

The network device may perform other actions for managing low latency traffic or provide low latency services. For example, the network device (or the access point) can disable aggregation for one or more wireless connections for which the packets are communicated to the one or more local network devices, in response to the packets corresponding to the one or more low latency classification rules. The network device can enable aggregation for other packets not corresponding to the one or more low latency classification rules. The network device can dynamically enable/allow or disable the aggregation for the one or more packets. In some cases, the aggregation may be disabled for the low latency pipelines used by the network device to transmit the latency service flows to the local network device.

In another example, the network device can bypass one or more mesh nodes of the local network to communicate the packets directly to the one or more devices, in response to the packets corresponding to the one or more low latency classification rules. For example, the local network may include the one or more mesh nodes. Transmitting packets to each mesh nodes intermediate to a particular local network device may increase latency. Hence, the network device can determine the path supporting the lowest latency and satisfying the bandwidth, etc., for the transmission of latency service flows, thereby bypassing one or more mesh nodes in the local network. In some cases, the one or more low latency pipelines used for the transmission of latency service flows can cause the packets to communicate from the network device to the local network device, while bypassing the one or more mesh nodes. As such, the low latency pipelines can be configured to at least one of bypass one or more mesh nodes or disable aggregation of data being communicated via the one or more low latency pipelines. It should be noted that other actions can be performed to provide low latency services not limited to those discussed herein.

At ACT 610, the network device can communicate or map the one or more packets not corresponding to the one or more low latency classification rules to a regular queue. In some cases, the regular queue may correspond to at least one of classic pipelines configured for the transmission of non-low latency traffic, for example. The network device may perform other operations or actions for managing latency-insensitive flows or packets from non-low latency applications, such as but not limited to load balancing, throughput prioritization in the mesh network, congestion avoidance, etc.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs or executable instructions embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs or executable instructions may be stored on or in one or more articles of manufacture as object code.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure. The headings provided in this document are non-limiting.

The applications and servers have been described above with the aid of functional building blocks illustrating the performance of certain significant functions. The boundaries of these functional building blocks have been arbitrarily defined for convenience of description. Functions and structures can be integrated together across such boundaries. Alternate boundaries could be defined as long as the certain significant functions are appropriately performed. Similarly, flow diagram blocks may also have been arbitrarily defined herein to illustrate certain significant functionality. To the extent used, the flow boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. A method comprising:
receiving, by an access point (303) from a device monitoring one or more low latency classification rules at a cable modem termination system, CMTS, (305) the one or more low latency classification rules, the access point (303) in communication with the CMTS (305) and providing wireless access to one or more devices in a local network;
receiving, by the access point (303) from the CMTS (305), packets corresponding to the one or more low latency classification rules; and
communicating, by the access point (303) based at least on the one or more low latency classification rules, the packets to a queue used for transmission of low latency traffic to the one or more devices in the local network.

2. The method of claim 1, further comprising identifying, by the access point (303), the low latency traffic from the CMTS (305) based at least on one or more flags or fields in one or more packets.

3. The method of claim 1 or 2, further comprising identifying, by the access point (303), the low latency traffic from the CMTS (305) based at least on tuple information in one or more packets.

4. The method of any of claims 1 to 3, further receiving, by the access point (303), information from the device to identify the low latency traffic from the CMTS (305).

5. The method of any of claims 1 to 4, further comprising using, by the access point (303) responsive to receiving the packets corresponding to the one or more low latency classification rules, the queue having higher priority than one or more other queues.

6. The method of any of claims 1 to 5, further comprising disabling, by the access point (303) responsive to the packets corresponding to the one or more low latency classification rules, aggregation for one or more wireless connections for which the packets are communicated to the one or more devices.

7. The method of any of claims 1 to 6, further comprising bypassing, by the access point (303) responsive to the packets corresponding to the one or more low latency classification rules, one or more mesh nodes of the local network to communicate the packets directly to the one or more devices.

8. The method any of claims 1 to 7, further comprising causing, by the access point (303), the packets corresponding to the one or more low latency classification rules to be communicated to the one or more devices in the local network via one or more low latency pipelines.

9. A method comprising:
receiving, by an access point (303), information identifying one or more latency service flows being communicated via cable through a cable modem termination system, CMTS, (305) in communication with the access point (303) providing wireless connectivity to a local network;
identifying, by the access point (303) using the information, packets corresponding to the one or more latency service flows for wireless communication to one or more devices on the local network; and
mapping, by the access point (303), the packets to one or more queues corresponding to one or more low latency pipelines for wirelessly communicating the packets to the one or more devices.

10. The method of claim 9, wherein the information identifies the one or more latency service flows based at least on one or more flags or fields in one or more packets of each of the one or more latency service flows.

11. The method of claim 9 or 10, wherein the information identifies the one or more latency service flows based at least on tuple information for one or more packets of each of the one or more latency service flows.

12. The method of any of claims 9 to 11, further comprising receiving, by the access point (303), the information from at least one device monitoring low latency service flows from the CMTS (305).

13. The method of any of claims 9 to 12, comprising at least one of the following features:
(i) further comprising receiving, by the access point (303), the information from at least one device monitoring low latency classification rules at the CMTS (305);
(ii) wherein the information comprises tuples to identify one or more packets;
(iii) wherein the one or more low latency pipelines are configured to at least one of bypass one or more mesh nodes or disable aggregation of data being communicated via the one or more low latency pipelines.

14. A system comprising:
a network device (310) in communication with a cable modem termination system, CMTS, (305) the CMTS (305) receiving, via cable, one or more low latency service flows, the network device (310) providing access to a local network over which packets of one or more low latency services are wireless communicated to one or more devices;
wherein the network device (310) is configured to:
receive information identifying one or more latency service flows being communicated via the CMTS (305);
identify, using the information, packets corresponding to the one or more latency service flows for wireless communication to the one or more devices on the local network; and
map the packets to one or more queues corresponding to one or more low latency pipelines for wirelessly communicating the packets to the one or more devices.

15. The system of claim 14, comprising at least one of the following features:
(i) wherein the network device (310) is one of a modem, a router, or an access point (303);
(ii) wherein the one or more queues are low latency queues or high priority queues;
(iii) wherein the network device (310) is further configured to disable aggregation for the one or more low latency pipelines;
(iv) wherein the network device (310) is further configured to bypass one or more mesh nodes on the local network for wireless communications to the one or more devices of the packets corresponding to the one or more latency service flows.
